(19) Europäisches Patentamt
European Patent Office
Office européen des brevets

(11) **EP 3 730 196 A1**

(12) **EUROPEAN PATENT APPLICATION**
published in accordance with Art. 153(4) EPC

(43) Date of publication:
**28.10.2020 Bulletin 2020/44**

(51) Int Cl.:
***A63B 71/06*** (2006.01)     ***A63B 69/00*** (2006.01)

(21) Application number: **18890236.5**

(22) Date of filing: **05.12.2018**

(86) International application number:
**PCT/JP2018/044640**

(87) International publication number:
**WO 2019/124069 (27.06.2019 Gazette 2019/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.12.2017 JP 2017242674**

(71) Applicant: **Sony Corporation**
**108-0075 Tokyo (JP)**

(72) Inventors:
• **MOCHIZUKI Keita**
**Tokyo 108-0075 (JP)**
• **FUKUMOTO Yasutaka**
**Tokyo 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING DEVICE, INFORMATION PROCESSING METHOD, AND PROGRAM**

(57) The present technology relates to an information processing apparatus, an information processing method, and a program, suitable for appropriately recognizing rhythm of motion of a user.

The information processing apparatus includes a motion rhythm recognizing unit configured to recognize motion rhythm indicating rhythm of motion of a user on the basis of detection data detected by a sensor apparatus at one or more detection positions including at least one portion on a body trunk of the user, the detection data indicating motion of the detection positions. The present technology can be applied, for example, to a production system that produces performance.

FIG. 4

EP 3 730 196 A1

**Description**

TECHNICAL FIELD

The present technology relates to an information processing apparatus, an information processing method, and a program, and particularly, relates to an information processing apparatus, an information processing method, and a program suitable for use in a case where rhythm of motion of a user is recognized.

BACKGROUND ART

In related art, a system of estimating movement rhythm of each user on the basis of movement information from a sensor worn by each of a plurality of users, calculating a difference between the movement rhythm of each user and basic movement rhythm and a difference in movement rhythm between users and giving feedback of the result to the users, has been proposed. Further, as the movement rhythm, utilization of tempo (for example, the number of beats per minute: BPM) has been proposed (see, for example, Patent Document 1).

CITATION LIST

PATENT DOCUMENT

Patent Document 1: Japanese Patent Application Laid-Open No. 2011-87794

SUMMARY OF THE INVENTION

PROBLEMS TO BE SOLVED BY THE INVENTION

However, rhythm of motion of a user is normally not monotonous rhythm like beats of music, and is more complicated. Therefore, there is a case where the rhythm of motion of the user cannot be appropriately expressed with the number of beats per unit time.

The present technology has been made in view of such circumstances and is directed to enabling rhythm of motion of a user to be appropriately recognized.

SOLUTIONS TO PROBLEMS

According to an aspect of the present technology, there is provided an information processing apparatus including a motion rhythm recognizing unit configured to recognize motion rhythm indicating rhythm of motion of a user on the basis of detection data detected by a sensor apparatus at one or more detection positions including at least one portion on a body trunk of the user, the detection data indicating motion of the detection positions.

According to an aspect of the present technology, there is provided an information processing method, including, by an information processing apparatus, recognizing motion rhythm indicating rhythm of motion of a user on the basis of detection data detected by a sensor apparatus at one or more detection positions including at least one portion on a body trunk of the user, the detection data indicating motion of the detection positions.

According to an aspect of the present technology, there is provided a program for causing a computer to execute processing of recognizing motion rhythm indicating rhythm of motion of a user on the basis of detection data detected by a sensor apparatus at one or more detection positions including at least one portion on a body trunk of the user, the detection data indicating motion of the detection positions.

In an aspect of the present technology, motion rhythm indicating rhythm of motion of a user is recognized on the basis of detection data detected by a sensor apparatus at one or more detection positions including at least one portion on a body trunk of the user, the detection data indicating motion of the detection positions.

EFFECTS OF THE INVENTION

According to one aspect of the present technology, it is possible to appropriately recognize rhythm of motion of a user. Further, according to one aspect of the present technology, it is possible to appropriately utilize rhythm of motion of a user.

Note that the advantageous effects described here are not necessarily limitative, and any of the advantageous effects described in the present disclosure may be attained.

BRIEF DESCRIPTION OF DRAWINGS

Fig. 1 is a block diagram illustrating a configuration example of hardware of a production system to which the present technology is applied.

Fig. 2 is a view illustrating an example of positions where wearable sensors are worn.

Fig. 3 is a view illustrating an example of positions where wearable sensors are worn.

Fig. 4 is a block diagram illustrating a configuration example of functions of the production system to which the present technology is applied.

Fig. 5 is a block diagram illustrating a configuration example of the wearable sensor.

Fig. 6 is a table indicating an example of specifications of sensors provided at the wearable sensor.

Fig. 7 is a flowchart for explaining processing of the wearable sensor.

Fig. 8 is a view illustrating an example of a format of a communication packet.

Fig. 9 is a table indicating a configuration example of motion detection data.

Fig. 10 is a flowchart for explaining motion analysis processing.

Fig. 11 is a view for explaining a difference between beats of music and motion rhythm.

Fig. 12 is a view for explaining an example of a method for generating a motion rhythm recognition model.

Fig. 13 is a view illustrating an example of skills of dance.

Fig. 14 is a view illustrating an example of skills of dance.

Fig. 15 is a view for explaining an example of a method for generating the motion recognition model.

Fig. 16 is a view for illustrating an example of a timing for making a notification of a type of motion.

Fig. 17 is a flowchart for explaining production control processing.

Fig. 18 is a table indicating a specific example of a production method.

Fig. 19 is a block diagram illustrating a configuration example of functions of a synchronization evaluation system to which the present technology is applied.

Fig. 20 is a flowchart for explaining synchronization evaluation processing.

Fig. 21 is a view for explaining a first example of a detection method of a synchronization degree.

Fig. 22 is a view for explaining a second example of a detection method of a synchronization degree.

Fig. 23 is a view for explaining the second example of a detection method of a synchronization degree.

Fig. 24 is a block diagram illustrating a configuration example of hardware of a first embodiment of an imaging system to which the present technology is applied.

Fig. 25 is a block diagram illustrating a configuration example of functions of the first embodiment of the imaging system to which the present technology is applied.

Fig. 26 is a flowchart for explaining imaging control processing.

Fig. 27 is a flowchart for explaining display control processing.

Fig. 28 is a view illustrating a first example of a display screen.

Fig. 29 is a view illustrating a second example of a display screen.

Fig. 30 is a view illustrating a third example of a display screen.

Fig. 31 is a block diagram illustrating a configuration example of functions of a second embodiment of the imaging system to which the present technology is applied.

Fig. 32 is a flowchart for explaining imaging control processing.

Fig. 33 is a flowchart for explaining display control processing.

Fig. 34 is a view illustrating a fourth example of a display screen.

Fig. 35 is a view illustrating a fifth example of a display screen.

Fig. 36 is a view illustrating a sixth example of a display screen.

Fig. 37 is a block diagram illustrating one embodiment of a music recommendation system to which the present technology is applied.

Fig. 38 is a flowchart for explaining music recommendation processing.

Fig. 39 is a view illustrating a configuration example of a computer.

MODE FOR CARRYING OUT THE INVENTION

An embodiment for implementing the present technology will be described below. The description will be provided in the following order.

1. First embodiment (production system)
2. Second embodiment (synchronization evaluation system)

3. Third embodiment (imaging system)
4. Fourth embodiment (imaging system)
5. Fifth embodiment (music recommendation system)
6. Modified examples
7. Others

<<1. First embodiment>>

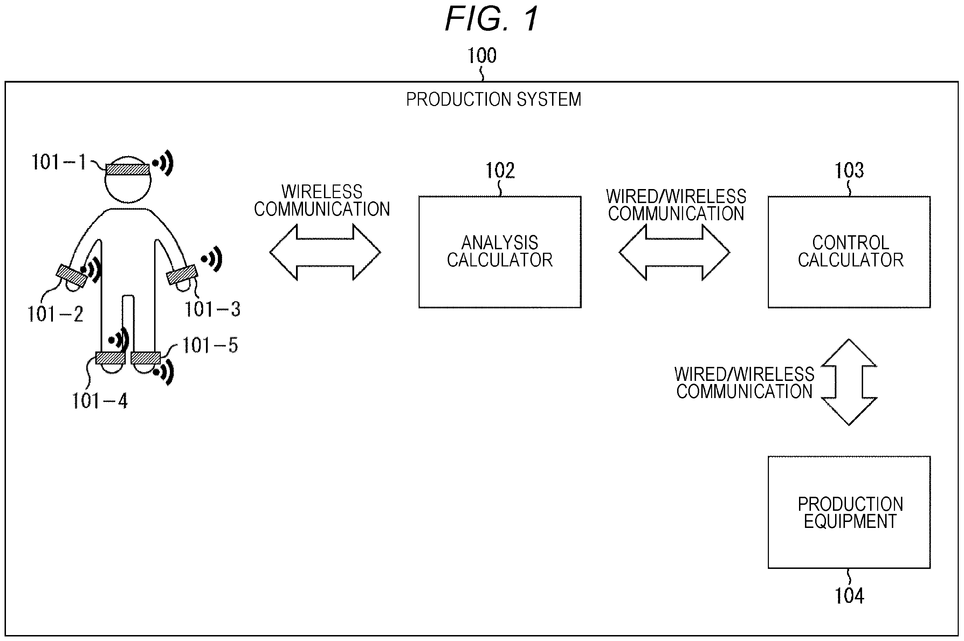

First, a first embodiment of the present technology will be described with reference to Fig. 1 to Fig. 18.

<Hardware configuration example of production system>

Fig. 1 illustrates a configuration example of hardware of a production system 100 to which the present technology is applied.

The production system 100 is a system which analyzes motion of a user and produces performance of the user on the basis of an analysis result.

Note that a type of performance to be produced is not particularly limited. For example, performance of a play, music, dance, or the like, is to be produced.

The production system 100 includes wearable sensors 101-1 to 101-5, an analysis calculator 102, a control calculator 103, and a production equipment 104.

Note that, in the following description, in a case where it is not necessary to individually distinguish among the wearable sensors 101-1 to 101-5, they will be simply referred to as a wearable sensor 101.

The respective wearable sensors 101 are sensor apparatuses which are worn at different positions of the user (hereinafter, referred to as detection points or detection positions) and detect motion at the respective detection points. The respective wearable sensors 101 transmit communication packets including motion detection data indicating detection results of motion at the respective detection points to the analysis calculator 102.

The analysis calculator 102 analyzes motion of the user on the basis of the motion detection data from the respective wearable sensors 101. The analysis calculator 102 transmits data indicating analysis results of motion of the user to the control calculator 103.

The control calculator 103 controls production of performance of the user by the production equipment 104 on the basis of the analysis result of motion of the user. For example, the control calculator 103 generates production control data for controlling production by the production equipment 104 and transmits the production control data to the production equipment 104.

The production equipment 104 produces performance of the user on the basis of the production control data.

Note that, in communication between each of the wearable sensor 101 and the analysis calculator 102, for example, an arbitrary scheme of low-delay near field communication is employed. By employing near field communication, it is possible to reduce power consumption of the wearable sensor 101 and make a size of the wearable sensor 101 smaller.

In communication between the analysis calculator 102 and the control calculator 103, for example, an arbitrary scheme of wireless communication or wired communication is employed.

In communication between the control calculator 103 and the production equipment 104, for example, an arbitrary scheme of wireless communication or wired communication is employed.

Further, for example, the analysis calculator 102 and the control calculator 103 may be constituted with one device.

<Example of position where each wearable sensor 101 is worn>

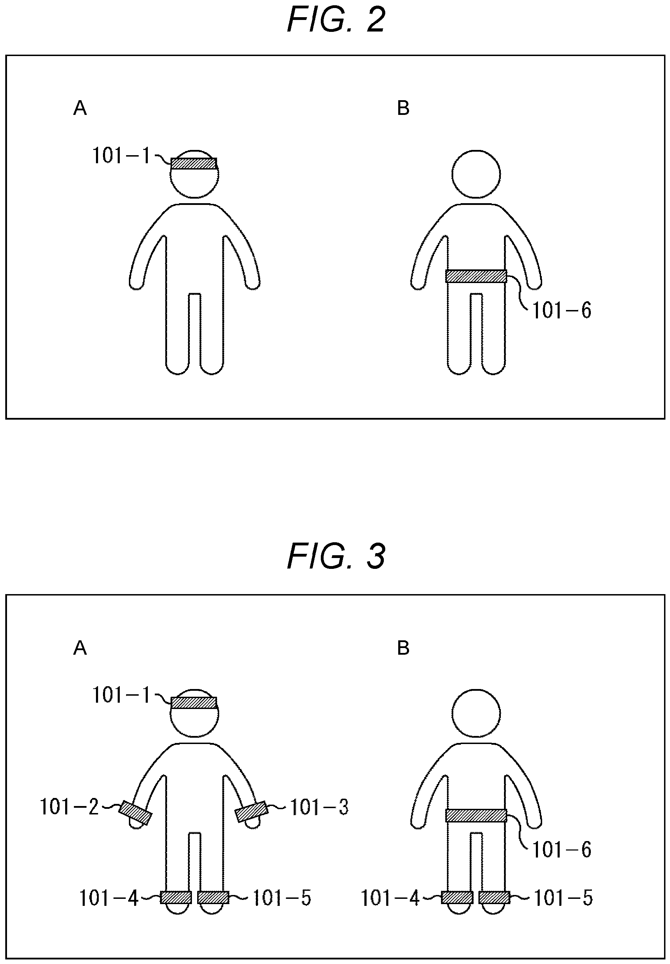

Figs. 2 and 3 schematically illustrate an example of positions where respective wearable sensors 101 are worn (detection points).

Fig. 2 illustrates an example of a minimum configuration of the wearable sensor 101. Specifically, Fig. 2 illustrates an example in a case where the user wears only one wearable sensor 101.

There is an experimental result in motion analysis which will be described later, that analysis accuracy is improved by detection of motion of a body trunk such as the head and the waist of the user. Therefore, in a case where the user wears only one wearable sensor 101, it is desirable that the wearable sensor 101 is worn on the body trunk of the user.

For example, in A in Fig. 2, the wearable sensor 101-1 is worn on the head of the user, and detects motion of the head of the user. In B in Fig. 2, the wearable sensor 101-6 is worn on the waist of the user, and detects motion of the waist of the user. That is, motion, center of gravity, an attitude, or the like, of the body trunk of the user are detected by the wearable sensor 101-1 or the wearable sensor 101-6.

For example, in dance, basically, rhythm is often kept by up-and-down movement of the body trunk. Therefore, for example, in a case where only recognition of motion rhythm which will be described later is performed in motion analysis, as illustrated in A or B in Fig. 2, the user only needs to wear the wearable sensor 101 at one portion on the body trunk.

Fig. 3 illustrates an example where the user wears the wearable sensors 101 at the hands and the feet in addition to the body trunk so that motion of the whole body of the user can be captured. Note that the user does not necessarily need to wear the wearable sensors 101 at all the hands and the feet, and, for example, the user may wear the wearable sensors 101 only at the hands or only at the feet.

In A in Fig. 3, compared to A in Fig. 2, the user additionally wears the wearable sensors 101-2 to 101-5 at both wrists and at both ankles of the user.

The wearable sensor 101-2 is worn on the left wrist of the user, and detects motion of the left wrist. The wearable sensor 101-3 is worn on the right wrist of the user, and detects motion of the right wrist. That is, motions of the both hands, snaps of the wrists, or the like, of the user are detected by the wearable sensor 101-2 and the wearable sensor 101-3.

The wearable sensor 101-4 is worn on the left ankle of the user, and detects motion of the left ankle. The wearable sensor 101-5 is worn on the right ankle of the user, and detects motion of the right ankle. That is, motions of both feet, step, or the like, of the user are detected by the wearable sensor 101-4 and the wearable sensor 101-5.

Further, motion of the user is analyzed on the basis of interrelation of motion of the body trunk, both hands, and both feet of the user.

In B in Fig. 3, compared to B in Fig. 2, the wearable sensor 101-4 and the wearable sensor 101-5 are additionally worn on the both ankles of the user. That is, motions of both feet, step, or the like, of the user are detected by the wearable sensor 101-4 and the wearable sensor 101-5.

Further, motion of the user is analyzed on the basis of interrelation of motion of the body trunk and both feet of the user.

Note that the number of the wearable sensors 101 and positions where the wearable sensors 101 are worn in Figs. 2 and 3 are an example, and are changed as appropriate in accordance with use application, accuracy, or the like, of motion analysis.

For example, the wearable sensor 101 may be worn on the back as a portion on the body trunk of the user. Further, the wearable sensors 101 may be worn on two or more portions on the body trunk of the user.

Note that, typically, as the number of the worn wearable sensors 101 is larger, while accuracy of motion analysis is improved, load on the user increases. Meanwhile, as the number of the worn wearable sensors 101 is smaller, while load on the user becomes smaller, accuracy of motion analysis degrades.

Note that it is assumed that rhythm is rarely kept only with intermediate joints such as the elbows and the knees. Therefore, it is considered that, at a maximum, six portions of the waist, the head, the both hands, and the both feet, if necessary, additionally, the fingers, are sufficient as portion where the wearable sensors 101 are worn.

Further, a wearing method of the wearable sensor 101 is not particularly limited. For example, a band, a belt, a supporter, a tape, a clip, or the like, are used. Note that it is desirable to minimize a range of movement of a position where each of the wearable sensors 101 is worn to an extent not inhibiting motion of the user or not providing a feeling of discomfort to the user, so that motion of each detection point can be detected with high accuracy.

Note that, as illustrated in Fig. 1 and A in Fig. 3, an example will be described below in a case where the wearable sensors 101-1 to 101-5 are worn on the head, the both hands, and the both feet of the user.

<Configuration example of functions of production system>

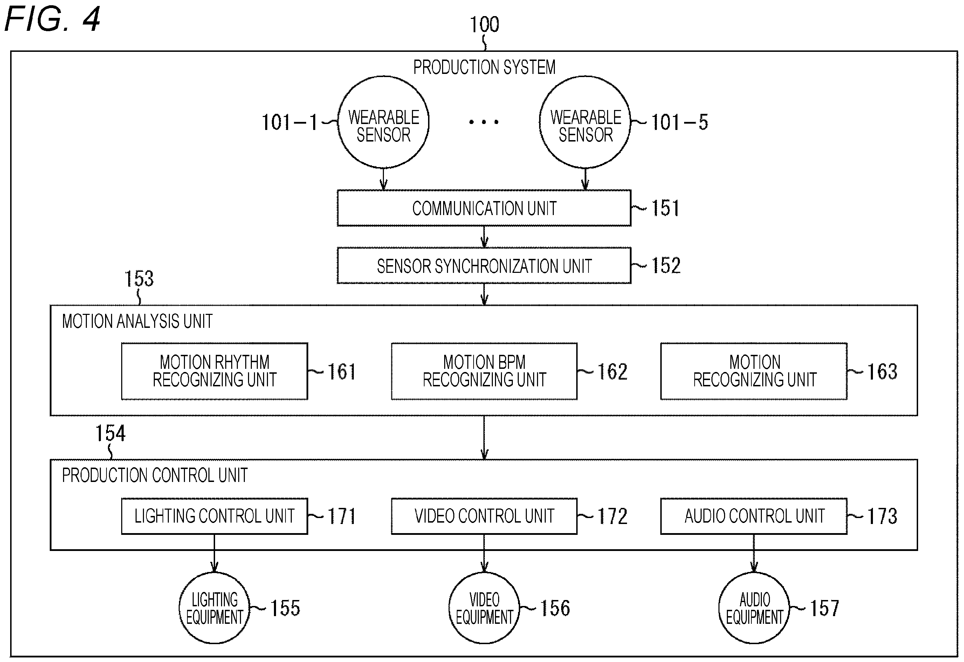

Fig. 4 illustrates a configuration example of functions of the production system 100.

The production system 100 includes the wearable sensors 101-1 to 101-5, a communication unit 151, a sensor synchronization unit 152, a motion analysis unit 153, a production control unit 154, lighting equipment 155, video equipment 156, and audio equipment 157.

The communication unit 151 receives communication packets from the respective wearable sensors 101 and supplies the communication packets to the sensor synchronization unit 152.

The sensor synchronization unit 152 absorbs a time difference of motion detection data at the respective detection points by achieving synchronization among the motion detection data included in the communication packets from the respective wearable sensors 101. The sensor synchronization unit 152 supplies the respective pieces of motion detection data after synchronization is achieved, to the motion analysis unit 153.

The motion analysis unit 153 is, for example, realized by the analysis calculator 102 in Fig. 1, and analyzes motion of the user. The motion analysis unit 153 includes a motion rhythm recognizing unit 161, a motion beats per minute (BPM) recognizing unit 162, and a motion recognizing unit 163.

The motion rhythm recognizing unit 161 performs processing of recognizing motion rhythm indicating rhythm of motion of the user on the basis of the motion detection data from the respective wearable sensors 101. The motion rhythm recognizing unit 161 supplies data indicating a recognition result of the motion rhythm of the user to the production control unit 154.

The motion BPM recognizing unit 162 performs processing of recognizing motion BPM indicating a basic frequency of the motion of the user on the basis of the motion detection data from the respective wearable sensors 101. The motion BPM recognizing unit 162 supplies data indicating a recognition result of the motion BPM of the user to the production control unit 154.

The motion recognizing unit 163 performs processing of recognizing motion of the user on the basis of the motion detection data from the respective wearable sensors 101. The motion recognizing unit 163 supplies data indicating a recognition result of the motion of the user to the production control unit 154.

The production control unit 154 is, for example, realized by the control calculator 103 in Fig. 1, and controls production of performance of the user by the lighting equipment 155, the video equipment 156, and the audio equipment 157. The production control unit 154 includes a lighting control unit 171, a video control unit 172, and an audio control unit 173.

The lighting control unit 171 generates lighting production control data for controlling production by the lighting equipment 155 on the basis of the motion rhythm, the motion BPM, the motion, or the like, of the user, and transmits the lighting production control data to the lighting equipment 155.

The video control unit 172 generates video production control data for controlling production by the video equipment 156 on the basis of the motion rhythm, the motion BPM, the motion, or the like, of the user, and transmits the video production control data to the video equipment 156.

The audio control unit 173 generates audio production control data for controlling production by the audio equipment 157 on the basis of the motion rhythm, the motion BPM, the motion, or the like, of the user, and transmits the audio production control data to the audio equipment 157.

The lighting equipment 155 is, for example, constituted with various kinds of lights, light sources, or the like. The lighting equipment 155 performs lighting production by outputting various kinds of light under control by the lighting control unit 171 on the basis of lighting production control data.

The video equipment 156 is constituted with, for example, a projector, a monitor, or the like. The video equipment 156 performs video production by outputting various kinds of videos under control by the video control unit 172 on the basis of video production control data.

The audio equipment 157 is constituted with, for example, a mixer, a speaker, or the like. The audio equipment 157 performs audio production by outputting various kinds of sound under control by the audio control unit 173 on the basis of audio production control data.

<Configuration example of wearable sensor 101>

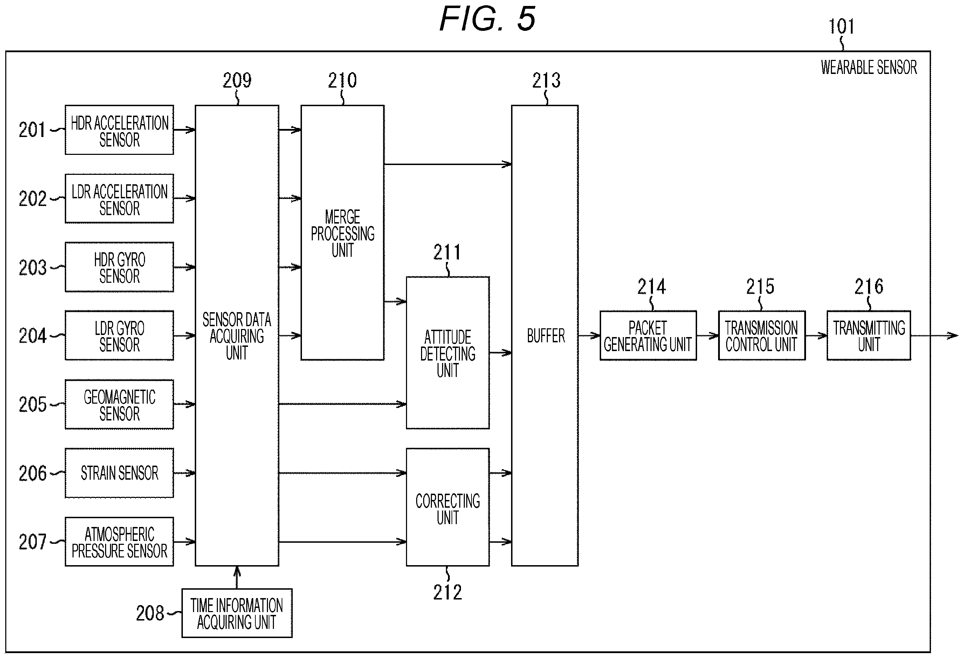

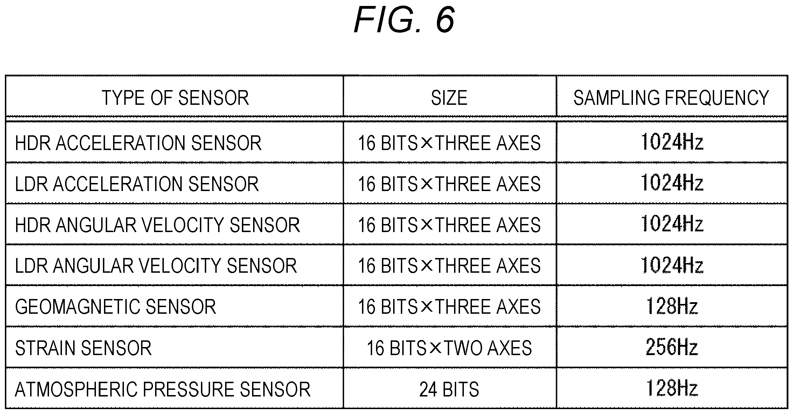

Fig. 5 illustrates a configuration example of the wearable sensor 101 in Fig. 1. Further, Fig. 6 illustrates an example of specifications of respective sensors of the wearable sensor 101.

The wearable sensor 101 includes a high dynamic range (HDR) acceleration sensor 201, a low dynamic range (LDR) acceleration sensor 202, a high dynamic range (HDR) gyro sensor 203, a low dynamic range (LDR) gyro sensor 204, a geomagnetic sensor 205, a strain sensor 206, an atmospheric pressure sensor 207, a time information acquiring unit 208, a sensor data acquiring unit 209, a merge processing unit 210, an attitude detecting unit 211, a correcting unit 212, a buffer 213, a packet generating unit 214, a transmission control unit 215, and a transmitting unit 216.

The HDR acceleration sensor 201 detects acceleration in three-axis directions of a pitch axis (x axis), a roll axis (y axis), and a yaw axis (z axis) at a position (detection point) at which the wearable sensor 101 is worn. For example, the HDR acceleration sensor 201 samples acceleration at the detection point at a sampling frequency of 1024 Hz, and outputs sensor data (hereinafter, referred to as HDR acceleration data) of 16 bits × three axes.

The LDR acceleration sensor 202 detects acceleration in three-axis directions of a pitch axis, a roll axis, and a yaw axis at a detection point. For example, the LDR acceleration sensor 202 samples acceleration at the detection point at a sampling frequency of 1024 Hz, and outputs sensor data (hereinafter, referred to as LDR acceleration data) of 16 bits × three axes.

Note that a dynamic range of acceleration which can be detected by the HDR acceleration sensor 201 is wider than a dynamic range of acceleration which can be detected by the LDR acceleration sensor 202. For example, the HDR acceleration sensor 201 outputs sensor data of ±32 G, while the LDR acceleration sensor 202 outputs sensor data of ±16 G.

The HDR gyro sensor 203 detects angular velocity around three axes of the pitch axis, the roll axis, and the yaw axis of the detection point. For example, the HDR gyro sensor 203 samples angular velocity at the detection point at a sampling frequency of 1024 Hz and outputs sensor data (hereinafter, referred to as HDR angular velocity data) of 16 bits × three axes.

The LDR gyro sensor 204 detects angular velocity around three axes of the pitch axis, the roll axis, and the yaw axis of the detection point. For example, the LDR gyro sensor 204 samples angular velocity at the detection point at a sampling frequency of 1024 Hz and outputs sensor data (hereinafter, referred to as LDR angular velocity data) of 16 bits × three axes.

Note that a dynamic range of acceleration which can be detected by the HDR gyro sensor 203 is wider than a dynamic range of angular velocity which can be detected by the LDR gyro sensor 204. For example, the HDR gyro sensor 203 outputs sensor data of ±4000 dps, while the LDR gyro sensor 204 outputs sensor data of ±2000 dps.

The geomagnetic sensor 205 detects geomagnetism in three-axis directions of the pitch axis, the roll axis, and the yaw axis around the detection point. For example, the geomagnetic sensor 205 samples geomagnetism around the detection point at a sampling frequency of 128 Hz and outputs sensor data (hereinafter, referred to as geomagnetic data) of 16 bits × three axes.

The strain sensor 206 detects strain (such as, for example, expansion and contraction of the detection point) in two-axis directions of the pitch axis and the roll axis of the detection point. For example, the strain sensor 206 samples strain of the detection point at a sampling frequency of 256 Hz and outputs sensor data (hereinafter, referred to as strain data) of 16 bits × two axes.

The atmospheric pressure sensor 207 detects an atmospheric pressure around the detection point. For example, a position in a height direction of the detection point is detected on the basis of the atmospheric pressure around the detection point. For example, the atmospheric pressure sensor 207 samples an atmospheric pressure around the detection point at a sampling frequency of 128 Hz and outputs sensor data (hereinafter, referred to as atmospheric pressure data) of 24 bits.

The time information acquiring unit 208 is constituted with, for example, a clock, or the like, acquires time information indicating current time and supplies the time information to the sensor data acquiring unit 209.

The sensor data acquiring unit 209 acquires the HDR acceleration data, the LDR acceleration data, the HDR angular velocity data and the LDR angular velocity data respectively from the HDR acceleration sensor 201, the LDR acceleration sensor 202, the HDR gyro sensor 203, and the LDR gyro sensor 204, adds the acquired time to the acquired data, and supplies the data to the merge processing unit 210. Further, the sensor data acquiring unit 209 acquires the geomagnetic data from the geomagnetic sensor 205, adds the acquired time to the acquired data and supplies the data to the attitude detecting unit 211. Still further, the sensor data acquiring unit 209 acquires the strain data and the atmospheric pressure data respectively from the strain sensor 206 and the atmospheric pressure sensor 207, adds the acquired time to the acquired data, and supplies the data to the correcting unit 212.

The merge processing unit 210 performs processing of merging the HDR acceleration data and the LDR acceleration data, and processing of merging the HDR angular velocity data and the LDR angular velocity data. The merge processing unit 210 supplies the merged acceleration data and the angular velocity data to the attitude detecting unit 211 and the buffer 213.

The attitude detecting unit 211 detects an attitude of the detection point on the basis of the acceleration data, the angular velocity data, and the geomagnetic data. The attitude of the detection point is, for example, expressed with an Euler angle. The attitude detecting unit 211 supplies data indicating a calculation result (hereinafter, referred to as attitude data) to the buffer 213.

The correcting unit 212 corrects the strain data and the atmospheric pressure data and supplies the corrected strain data and atmospheric pressure data to the buffer 213.

The buffer 213 temporarily accumulates the attitude data, the acceleration data, the angular velocity data, the strain data, and the atmospheric pressure data.

The packet generating unit 214 generates communication packets for transmitting the motion detection data including the attitude data, the acceleration data, the angular velocity data, the strain data, and the atmospheric pressure data accumulated in the buffer 213 and supplies the communication packets to the transmission control unit 215.

The transmission control unit 215 controls transmission of the communication packets by the transmitting unit 216.

The transmitting unit 216 transmits the communication packets to the communication unit 151 using a predetermined scheme of wireless communication.

Note that, while illustration is omitted, respective units of the wearable sensor 101 are, for example, driven by a battery.

<Processing of production system>

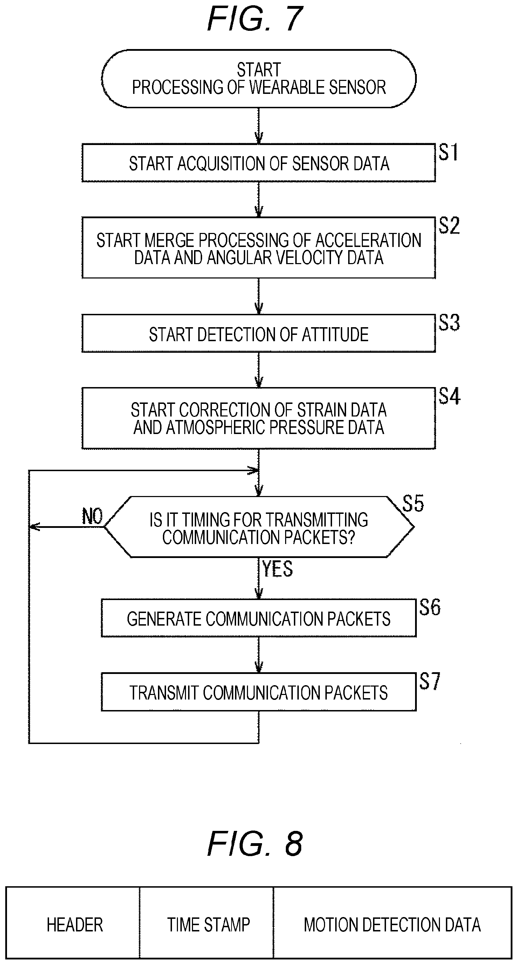

Processing of the production system 100 will be described next with reference to Fig. 7 to Fig. 18.

<Processing of wearable sensor 101>

Processing of the wearable sensor 101 will be described first with reference to the flowchart in Fig. 7.

This processing is, for example, started when the wearable sensor 101 is powered on, and ends when the wearable sensor 101 is powered off.

In step S1, the sensor data acquiring unit 209 starts acquisition of the sensor data.

Specifically, the sensor data acquiring unit 209 starts processing of acquiring the HDR acceleration data, the LDR acceleration data, the HDR angular velocity data, and the LDR angular velocity data respectively from the HDR acceleration sensor 201, the LDR acceleration sensor 202, the HDR gyro sensor 203, and the LDR gyro sensor 204, adding the acquired time to the acquired data, and supplying the data to the merge processing unit 210. Further, the sensor data acquiring unit 209 starts processing of acquiring the geomagnetic data from the geomagnetic sensor 205, adding the acquired time to the acquired data and supplying the data to the attitude detecting unit 211. Still further, the sensor data acquiring unit 209 starts processing of acquiring the strain data and the atmospheric pressure data respectively from the strain sensor 206 and the atmospheric pressure sensor 207, adding the acquired time to the acquired data, and supplying the data to the correcting unit 212.

In step S2, the merge processing unit 210 starts merge processing of the acceleration data and the angular velocity data.

Specifically, the merge processing unit 210 starts processing of merging (synthesizing) the HDR acceleration data and the LDR acceleration data, supplying the merged acceleration data to the buffer 213 and causing the data to be accumulated.

Note that among the merged acceleration data, as data within a range of a dynamic range of the LDR acceleration data, data based on the LDR acceleration data is used, and as data in other ranges, data based on the HDR acceleration data is used. By this means, detection accuracy of acceleration within the range of the dynamic range of the LDR acceleration data is improved in the merged acceleration data.

In addition, the merge processing unit 210 starts processing of merging (synthesizing) the HDR angular velocity data and the LDR angular velocity data, supplying the merged angular velocity data to the buffer 213 and causing the data to be accumulated.

Note that among the merged angular velocity data, as data within a range of a dynamic range of the LDR angular velocity data, data based on the LDR angular velocity data is used, and as data in other ranges, data based on the HDR angular velocity data is used. By this means, detection accuracy of angular velocity within the range of the dynamic range of the LDR angular velocity data is improved in the merged angular velocity data.

In step S3, the attitude detecting unit 211 starts detection of the attitude. Specifically, the attitude detecting unit 211 starts processing of detecting Euler angles around three axes of the pitch axis, the roll axis, and the yaw axis indicating the attitude of the detection point on the basis of the acceleration data, the angular velocity data, and the geomagnetic data. Further, the attitude detecting unit 211 starts processing of supplying attitude data indicating a detection result to the buffer 213 and causing the data to be accumulated.

In step S4, the correcting unit 212 starts correction of the strain data and the atmospheric pressure data. For example, the correcting unit 212 starts processing noise removal, conversion, or the like of a data size of the strain data and the atmospheric pressure data. Further, the correcting unit 212 starts processing of supplying the corrected strain data and atmospheric pressure data to the buffer 213 and causing the data to be stored.

In step S5, the packet generating unit 214 determines whether or not it is a timing for transmitting the communication packets. This determination processing is repeatedly executed until it is determined that it is a timing for transmitting the communication packets, and, in a case where it is determined that it is a timing for transmitting the communication packets, the processing proceeds to step S6.

Note that, for example, the communication packets are transmitted at predetermined intervals. For example, the communication packets are transmitted at a transmission frequency of 128 Hz (that is, 128 times/second). In this case, a sampling frequency of the motion detection data included in the communication packets becomes 128 Hz.

In step S6, the packet generating unit 214 generates communication packets. For example, the packet generating unit 214 reads out the latest attitude data, acceleration data, angular velocity data, strain data, and atmospheric pressure data from the buffer 213. Further, the packet generating unit 214 acquires time information indicating current time from the time information acquiring unit 138. Then, the packet generating unit 214 generates communication packets including the attitude data, the acceleration data, the angular velocity data, the strain data, and the atmospheric pressure data read out from the buffer 213.

Fig. 8 illustrates an example of a format of the communication packet generated by the packet generating unit 214. The communication packet includes a header, a time stamp, and the motion detection data.

At the time stamp, for example, time at which the sensor data is acquired is set. Note that, as the time at which the sensor data is acquired, for example, the earliest time is set among time at which respective pieces of sensor data used for the motion detection data within the communication packets are acquired. Further, for example, in a case where acquisition timings of the respective pieces of data included in the motion detection data are different, a time stamp (time at which the sensor data is acquired) may be stored in the communication packets for each piece of data. In this case, a format of the communication packet becomes such that, for example, a header, a time stamp 1, data 1 (for example, attitude data) included in the motion detection data, a time stamp 2, data 2 (for example, acceleration data) included in the motion detection data, ....

The motion detection data includes the attitude data, the acceleration data, the angular velocity data, the strain data, and the atmospheric pressure data, which are read out from the buffer 213. Note that the motion detection data is, for example, encrypted using a predetermined scheme.

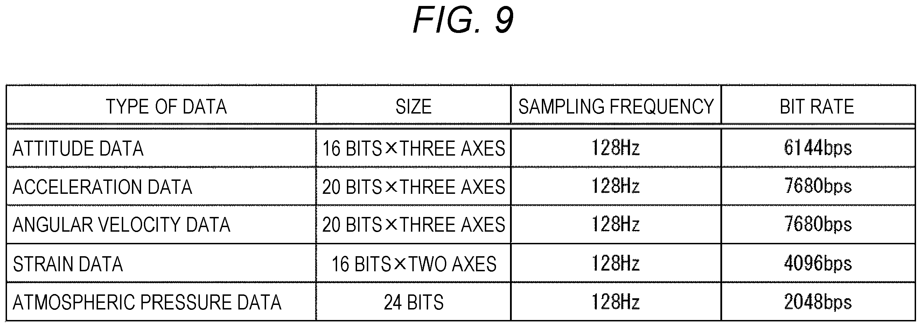

Fig. 9 illustrates an example of specifications of the respective pieces of data included in the motion detection data.

A size of the attitude data is set at, for example, 16 bits × three axes. In a case where a transmission frequency of the communication packets is 128 Hz, a sampling frequency of the attitude data becomes 128 Hz, and a bit rate becomes 6,144 bit per second (bps).

A size of the acceleration data is set at, for example, 20 bits × three axes. In a case where a transmission frequency of the communication packets is 128 Hz, a sampling frequency of the acceleration data becomes 128 Hz, and a bit rate becomes 7,680 bps.

A size of the angular velocity data is set at, for example, 20 bits × three axes. In a case where a transmission frequency of the communication packets is 128 Hz, a sampling frequency of the angular velocity data becomes 128 Hz, and a bit rate becomes 7,680 bps.

A size of the strain data is set at, for example, 16 bits × two axes. In a case where a transmission frequency of the communication packets is 128 Hz, a sampling frequency of the strain data becomes 128 Hz, and a bit rate becomes 4,096 bps.

A size of the atmospheric pressure data is set at, for example, 24 bits. In a case where a transmission frequency of the communication packets is 128 Hz, a sampling frequency of the atmospheric pressure data becomes 128 Hz, and a bit rate becomes 2,048 bps.

The packet generating unit 214 supplies the communication packets to the transmission control unit 215. Further, the packet generating unit 214 deletes the respective pieces of data to be transmitted using the communication packets and data older than the data from the buffer 213.

In step S7, the transmitting unit 216 transmits the communication packets to the communication unit 151 under control by the transmission control unit 215.

Thereafter, the processing returns to step S5, and processing in step S5 and subsequent step is executed.


<Motion analysis processing>

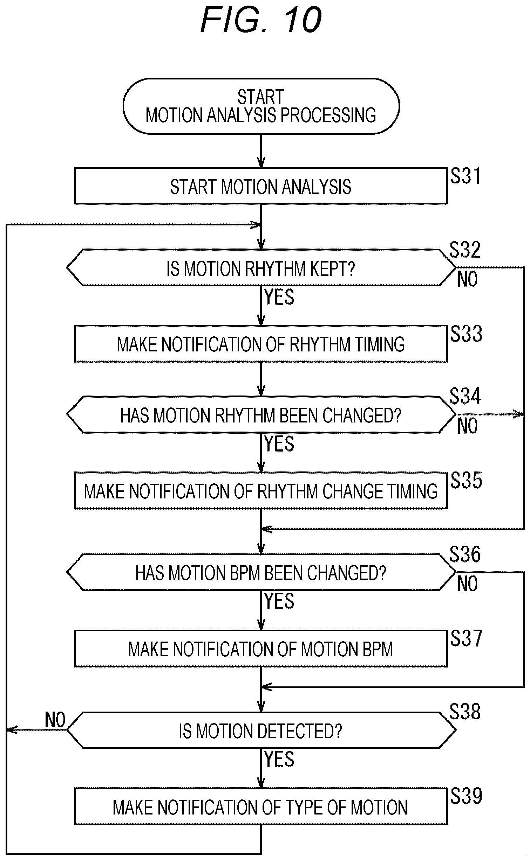

Motion analysis processing to be executed by the motion analysis unit 153, which is to be executed to correspond to the processing of the wearable sensor 101 in Fig. 7, will be described next with reference to the flowchart in Fig. 10.

This processing is, for example, started when the analysis calculator 102 is powered on, and ends when the analysis calculator 102 is powered off.

In step S31, the motion analysis unit 153 starts motion analysis.

Specifically, the motion rhythm recognizing unit 161 starts processing of recognizing motion rhythm of the user on the basis of the motion detection data supplied from each of the wearable sensor 101 via the communication unit 151 and the sensor synchronization unit 152, for example, using a motion rhythm recognition mode obtained through learning processing in advance.

For example, the motion rhythm recognizing unit 161 starts processing of detecting a timing at which the user keeps motion rhythm (rhythm of motion).

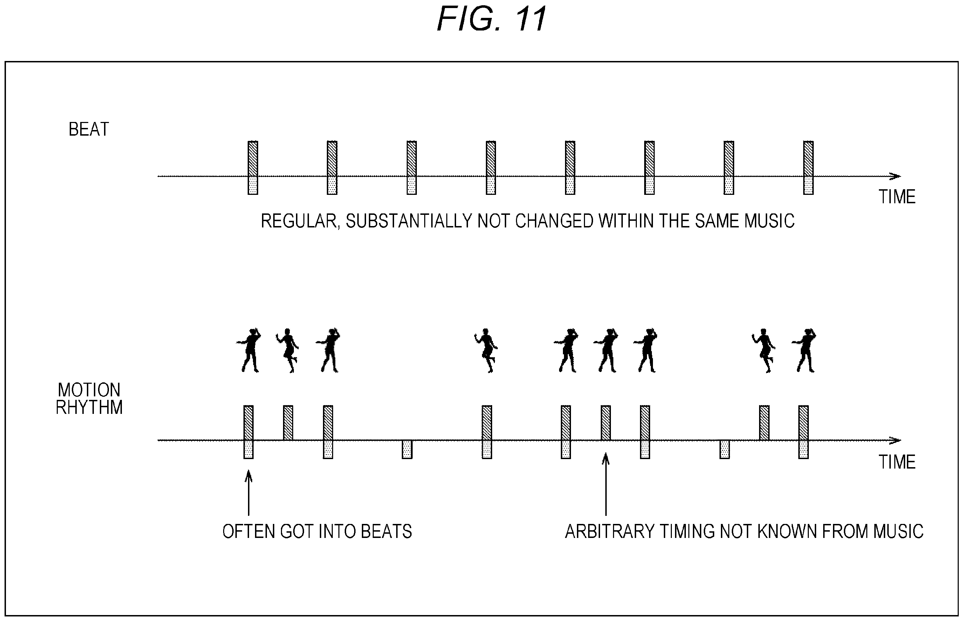

Note that Fig. 11 simply illustrates a difference between beats of music and motion rhythm. An upper graph indicates an example of beats of music, while a lower graph indicates an example of motion rhythm.

The beats of music are regularly beaten at substantially regular intervals with little change within the same music. Meanwhile, while the motion rhythm is often synchronized with the beats of music (got into the beats of music), the motion rhythm is also often kept at an arbitrary timing which is different from the beats and which cannot be known from the music.

For example, the motion rhythm is expressed with accent of motion of the user. Further, the accent of the motion of the user is, for example, expressed with change in a direction, speed and a pattern of motion of the user. For example, there are the following examples of motion in which motion rhythm is kept in dance.

- move the body trunk up and down or sway from side to side
- temporarily stand still and hold a pose

- quickly switch a direction of movement of the neck, the hands, or the feet
- make a turn
- periodically move the hands
- step
- headbanging
- do snap
- count with the fingers
- make a quick movement

In the above-described motion, a timing at which the direction, the speed or the pattern changes, for example, a timing at which the user stops motion, changes the direction of motion, or starts motion becomes a timing at which the user keeps motion rhythm.

However, the user does not necessarily keep motion rhythm at all timings at which the direction, the speed, and the pattern of the motion of the user change. For example, in headbanging, while the head is swayed up and down, there is a case where the motion rhythm is kept at both timings at which the head is stopped at an up position and at a down position or there is a case where the motion rhythm is kept at only one of the timings.

Further, for example, the motion rhythm recognizing unit 161 starts calculation of a moving-average of intervals at which the user keeps motion rhythm (firing intervals of motion rhythm).

Further, for example, the motion rhythm recognizing unit 161 starts processing of detecting a degree of rhythm indicating strength of the motion rhythm of the user (strength of rhythm of motion of the user) and supplying rhythm degree data indicating the detected degree of rhythm to the production control unit 154. The degree of rhythm is, for example, expressed with strength of accent of the motion of the user.

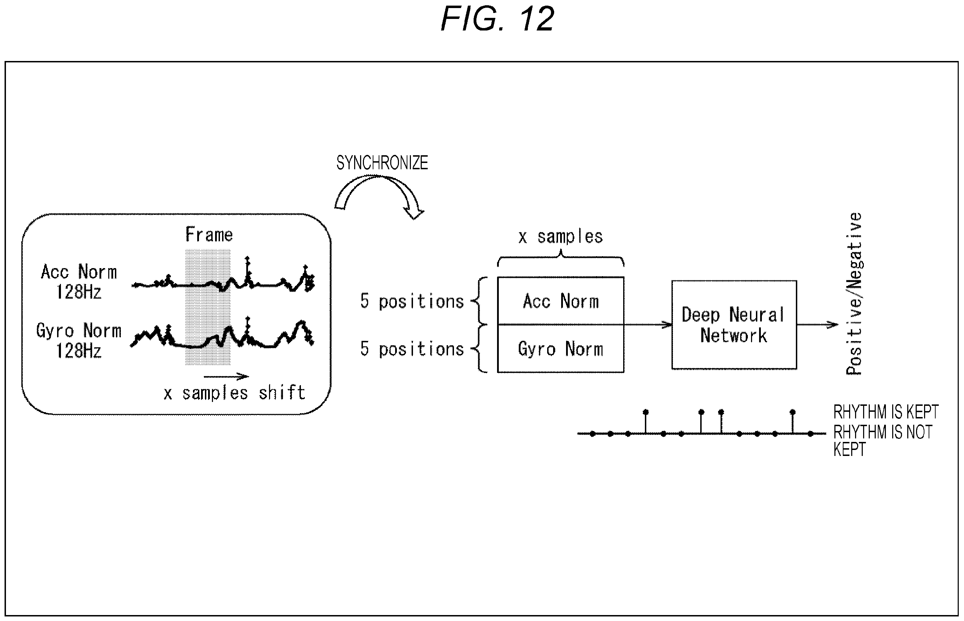

Here, an example of a method for generating a motion rhythm recognition model will be described with reference to Fig. 12.

For example, the user who wears the respective wearable sensors 101 dances while keeping rhythm to click sound. That is, the user keeps rhythm at a timing at which click sound is produced while dancing. Intervals of the click sound may be constant or does not have to be constant. Then, the click sound is input to a deep neural network as correct data. That is, a timing at which the click sound is produced is provided to the deep neural network as correct data indicating a timing at which the user keeps motion rhythm.

Meanwhile, norm of the acceleration data (Acc in the drawing) and norm of the angular velocity data (Gyro in the drawing) of each of the wearable sensor 101 are extracted in units of frame while a frame having a predetermined sample (for example, x samples) width is shifted in a time axis direction. Then, synchronization is achieved between the norm of the acceleration data and the norm of the angular velocity data of each of the wearable sensor 101 within the extracted frame, and data after synchronization is achieved is input to the deep neural network.

Here, the norm is a size of a vector of the acceleration data or the angular velocity data.

Further, the motion rhythm recognition model for recognizing motion rhythm of the user is generated through learning processing using the deep neural network.

Note that, while, in this example, an example is described where a discrete value of one or zero indicating whether or not motion rhythm is kept is output from the motion rhythm recognition model, the degree of rhythm (continuous value) may be output. Further, for example, reliability of a recognition result may be output from the motion rhythm recognition model.

The motion BPM recognizing unit 162 starts processing of recognizing motion BPM of the user on the basis of the motion detection data supplied from each of the wearable sensor 101 via the communication unit 151 and the sensor synchronization unit 152.

Here, the motion BPM is, for example, expressed with a basic frequency of motion of the user. For example, a basic frequency of the acceleration data or the angular velocity data is detected as the motion BPM. For example, in a case where the user keeps rhythm with constant period by moving his/her body up and down, the up-and-down movement of one time corresponds to one beat of the motion BPM.

Therefore, the motion rhythm expresses movement of the user, which is irregularly observed, and the motion BPM expresses periodic movement when the motion of the user is observed for a long period.

Note that typical BPM is determined by music. Meanwhile, in a case where the user dances to music, there is a case where the user changes the BPM of the music to double, 1/2 times, or the like, and dances to the speed. Therefore, motion of the user becomes fast or slow even with the same music. Accordingly, the motion BPM does not necessarily match the BPM of the music, and there is a case where the motion BPM may change within the same music.

The motion recognizing unit 163 starts processing of recognizing motion of the user on the basis of the motion detection data supplied from each of the wearable sensor 101 via the communication unit 151 and the sensor synchronization unit 152, for example, using a motion recognition model obtained through learning processing in advance.

Here, definition of motion in the present technology will be described. Note that, while, in the first embodiment, an example is described where performance of the user is produced, motion in the present technology is not limited to motion relating to performance.

Specifically, the motion is, for example, a unit of motion constituting behavior of the user (person) based on predetermined category. Therefore, the motion becomes motion of the user in a shorter period than behavior. Further, the motion may be motion of the whole body of the user or may be motion of part of the body of the user.

Meanwhile, the behavior is aggregation of a series of motion based on predetermined category and includes combination of a plurality of types of motion. For example, aggregation of a series of motion for achieving a predetermined purpose becomes behavior.

Note that, in the present technology, types of the behavior and the motion can be arbitrarily set or changed. For example, behavior for which motion is to be recognized is classified on the basis of types of sports such as dance, ice skating, rugby, triathlon, swimming, and climbing. In this case, for example, it is possible to regard sports in which a plurality of types is combined like all-around gymnastics as one type of behavior.

Further, for example, behavior for which motion is to be recognized is classified on the basis of behavior in daily life such as commuting, driving, working, studying, taking care of children, sleeping, cooking, eating, watching TV, singing, playing music, and shooting.

Meanwhile, for example, motion to be recognized is classified on the basis of skills in dance such as sliding, jerking, and Biz Markie for behavior of dance. Alternatively, motion to be recognized is classified on the basis of motion in dance such as rotation, jumping, stepping, swaying from side to side, and shaking up and down for behavior of dance. Note that motion to be recognized may be classified on the basis of both skills and motion of the dance.

For example, motion to be recognized is classified on the basis of skills in figure skating such as axel, lutz, and salchow for behavior of figure skating. Alternatively, motion to be recognized is classified on the basis of motion in figure skating such as skating, rotating, jumping, and stepping for behavior of figure skating. Note that motion to be recognized may be classified on the basis of both skills and motion of figure skating.

For example, motion to be recognized is classified on the basis of motion specific to rugby such as scrum, try, run, pass, and tackle for behavior of rugby. Alternatively, for example, motion to be recognized is classified on the basis of typical motion such as running, jumping, throwing, catching, and clashing for behavior of rugby. Note that motion to be recognized may be classified on the basis of both the motion specific to rugby and the typical motion.

For example, motion to be recognized is classified on the basis of a stroke of swimming such as crawl, breast stroke, butterfly, and backstroke for behavior of swimming. Alternatively, motion to be recognized is classified on the basis of motion of swimming such as diving, turning, breathing, and kicking for behavior of swimming, for example. Note that motion to be recognized may be classified on the basis of both stroke and motion of swimming.

For example, motion to be recognized is classified on the basis of types of triathlon of, swimming, cycling, and running for behavior of triathlon.

For example, motion to be recognized is classified on the basis of types of gymnastics such as pommel horse, floor exercise, and rings for behavior of all-around gymnastics.

For example, motion to be recognized is classified on the basis of motion during commuting such as walking, taking a rest, getting on a train, and climbing the stairs for behavior of commuting.

For example, motion to be recognized is classified on the basis of motion during driving such as accelerating, braking, changing gears, and viewing rear side for behavior of driving.

For example, motion to be recognized is classified on the basis of motion during working such as talking, listening, writing, calling, using a PC, and meeting for behavior of working.

Note that the same motion of the user can become behavior or motion in accordance with a difference in classification. For example, respective events of triathlon (swimming, cycling, and running) can become behavior for which motion is to be recognized alone. That is, there is a case where swimming, cycling, or running is classified as behavior, and processing of recognizing motion is performed for each type of behavior.

Further, as well as motion of the whole body of the user, for example, it is also possible to set motion for each portion of the user, such as motion of the feet and motion of the hands as motion to be recognized.

Note that the motion recognizing unit 163 basically recognizes a type of motion of the user (for example, semantic information of motion) and does not recognize detailed motion of each type of motion.

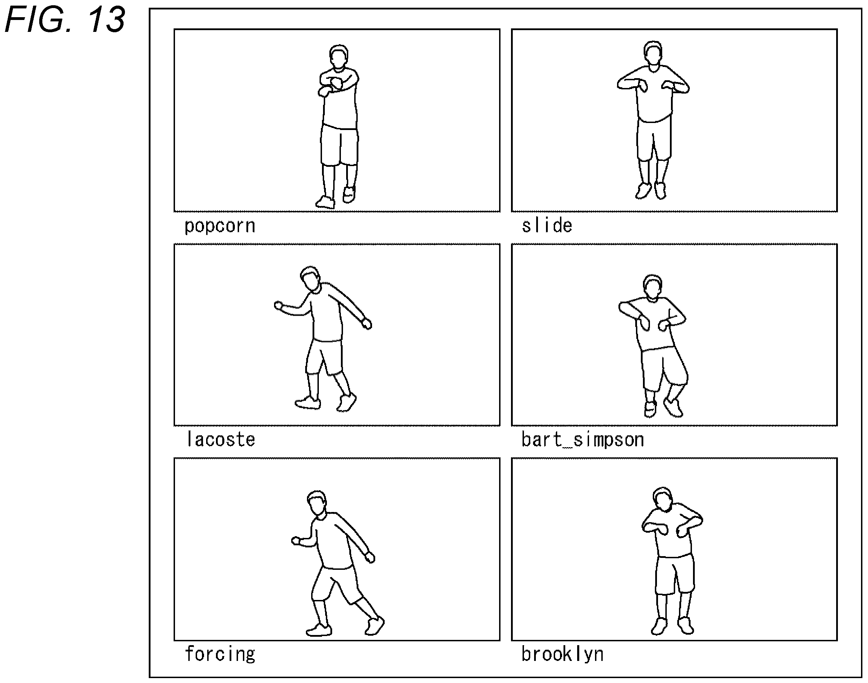

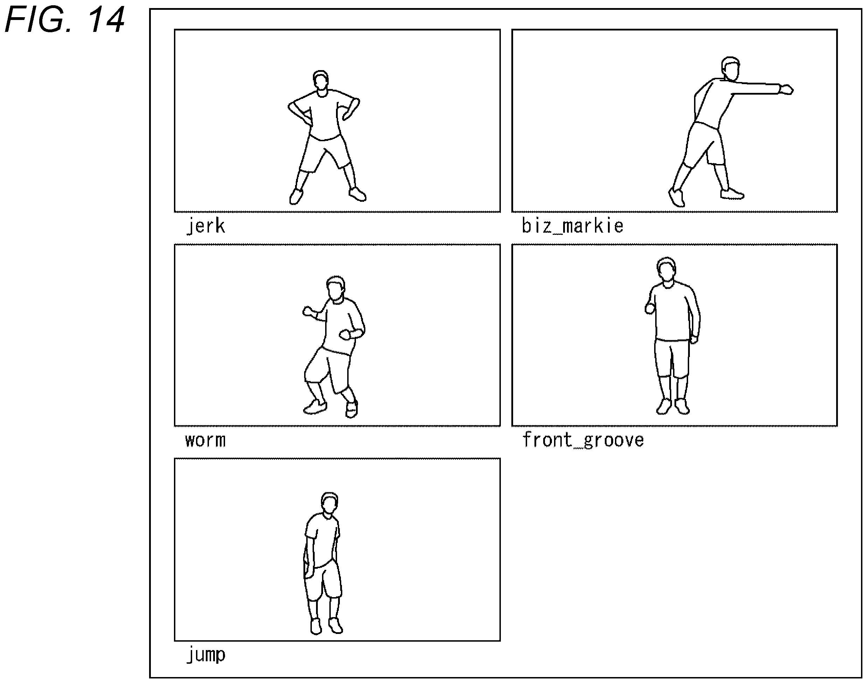

For example, in a case where the user dances, as illustrated in Figs. 13 and 14, types of individual skills such as popcorn, slide, Lacoste, Bart Simpson, forcing, Brooklyn, jerk, Biz Markie, worm, front groove, and jump are recognized. Meanwhile, a difference in motion in the individual skills is not recognized. That is, even if the user performs the same dance skills while changing motion of the hands and the feet and changing the rhythm, they are recognized as the same dance skills, and a difference in more details is not recognized.

In this manner, by limiting recognition to recognition of types of motion of the user based on the predetermined category, it is possible to reduce the number of wearable sensors 101 to be worn. As a result, compared to a motion capture system in related art which is used in computer graphics (CG), or the like, it is possible to reduce load of the user. For example, even if the user wears the wearable sensor 101, the user can move substantially as usual with little limitation in motion.

Note that it is also possible to recognize detailed motion of each type of motion as necessary.

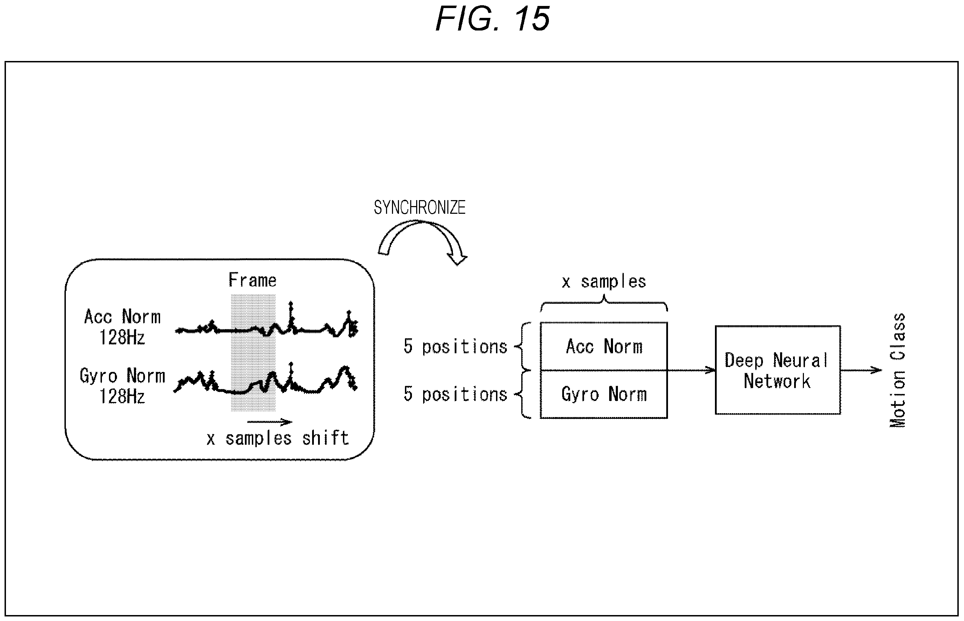

Here, an example of a method for generating a motion recognition model will be described with reference to Fig. 15.

For example, the user who wears each of the wearable sensor 101 makes various kinds of motion to be recognized. Then, types of motion (motion classes) made by the user are provided to the deep neural network as correct data.

Meanwhile, norm of the acceleration data (Acc in the drawing) and norm of the angular velocity data (Gyro in the drawing) of each of the wearable sensor 101 at the time when the user makes each motion are extracted in units of frame while a frame having a predetermined sample (for example, x samples) width is shifted in a time axis direction. Then, synchronization is achieved between the norm of the acceleration data and the norm of the angular velocity data within the extracted frame, and data after synchronization is achieved is input to the deep neural network.

Further, the motion recognition model for recognizing motion of the user is generated through learning processing using the deep neural network.

Returning to Fig. 10, in step S32, the motion rhythm recognizing unit 161 determines whether or not motion rhythm is kept. In a case where it is determined that motion rhythm is kept, the processing proceeds to step S33.

In step S33, the motion rhythm recognizing unit 161 makes a notification of a rhythm timing. That is, the motion rhythm recognizing unit 161 supplies rhythm timing data indicating a timing at which the user keeps motion rhythm to the production control unit 154.

In step S34, the motion rhythm recognizing unit 161 determines whether or not the motion rhythm changes. For example, in a case where a moving-average of intervals at which the user keeps motion rhythm changes by equal to or greater than a predetermined threshold, the motion rhythm recognizing unit 161 determines that the motion rhythm changes, and the processing proceeds to step S35.

Note that, in the first processing in step S34, it is always determined that the motion rhythm changes, and the processing proceeds to step S35.

In step S35, the motion rhythm recognizing unit 161 makes a notification of a rhythm change timing. That is, the motion rhythm recognizing unit 161 supplies rhythm change timing data indicating a timing at which the motion rhythm changes to the production control unit 154.

Thereafter, the processing proceeds to step S36.

Meanwhile, in step S34, for example, in a case where the moving-average of intervals at which the motion rhythm is kept does not change by equal to or greater than the predetermined threshold, the motion rhythm recognizing unit 161 determines that the motion rhythm does not change, the processing in step S35 is skipped, and the processing proceeds to step S36.

Further, in step S32, in a case where it is determined that motion rhythm is not kept, the processing from step S33 to step S35 is skipped, and the processing proceeds to step S36.

In step S36, the motion BPM recognizing unit 162 determines whether or not the motion BPM has changed. For example, in a case where a change amount of the motion BPM is equal to or greater than a predetermined threshold, the motion BPM recognizing unit 162 determines that the motion BPM has changed, and the processing proceeds to step S37.

Note that, in the first processing in step S36, it is always determined that the motion BPM changes, and the processing proceeds to step S37.

In step S37, the motion BPM recognizing unit 162 makes a notification of the motion BPM. That is, the motion BPM recognizing unit 162 supplies motion BPM data indicating the detected motion BPM to the production control unit 154.

Thereafter, the processing proceeds to step S38.

Meanwhile, in step S36, for example, in a case where the change amount of the motion BPM is less than the predetermined threshold, the motion BPM recognizing unit 162 determines that the motion BPM has not changed, and the processing in step S37 is skipped, and the processing proceeds to step S38.

In step S38, the motion recognizing unit 163 determines whether or not motion is detected. In a case where it is determined that motion is detected, the processing proceeds to step S39.

In step S39, the motion recognizing unit 163 makes a notification of the motion type. That is, the motion recognizing unit 163 supplies motion data indicating the detected motion type to the production control unit 154.

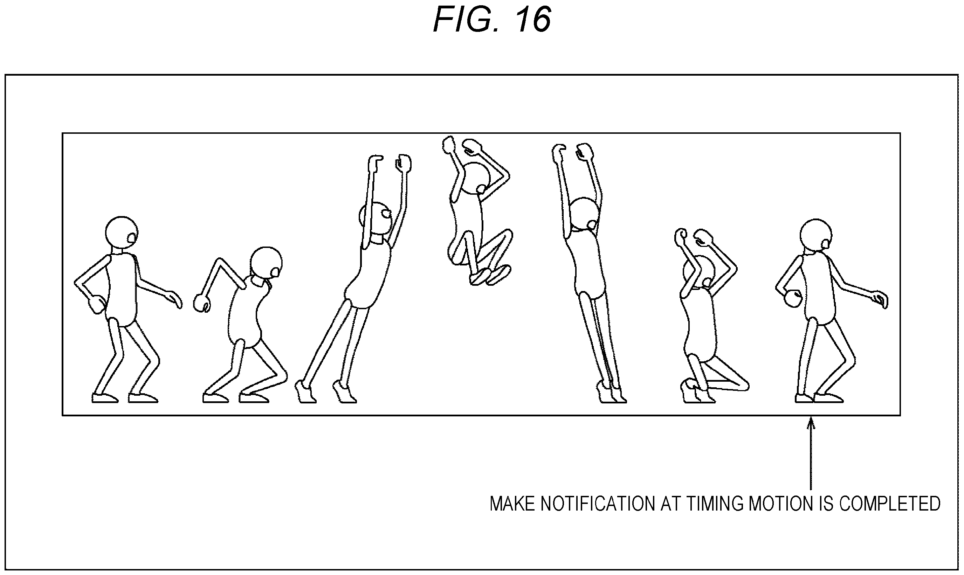

Note that a timing for making a notification of a type of motion is, for example, a timing at which the motion is completed. For example, as illustrated in Fig. 16, in a case where the user jumps, a notification of the type of the motion is given at a time point at which the user stands up after landing.

Thereafter, the processing returns to step S32, and processing in step S32 and subsequent step is executed.

Meanwhile, in step S38, in a case where it is determined that motion is not detected, the processing returns to step S32, and processing in step S32 and subsequent step is executed.

<Production control processing>

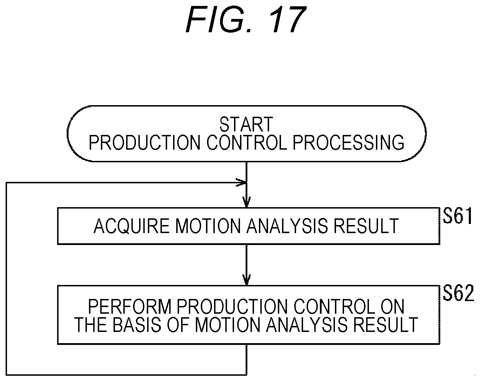

Production control processing to be executed by the production control unit 154, which is executed to correspond to the motion analysis processing in Fig. 10, will be described next with reference to the flowchart in Fig. 17.

This processing is, for example, started when the control calculator 103 is powered on, and ends when the control calculator 103 is powered off.

In step S61, the production control unit 154 acquires a motion analysis result. Specifically, the production control unit 154 acquires the rhythm degree data, the rhythm timing data, the rhythm change timing data, the motion BPM data or the motion data from the motion analysis unit 153.

In step S62, the production control unit 154 performs production control on the basis of the motion analysis result.

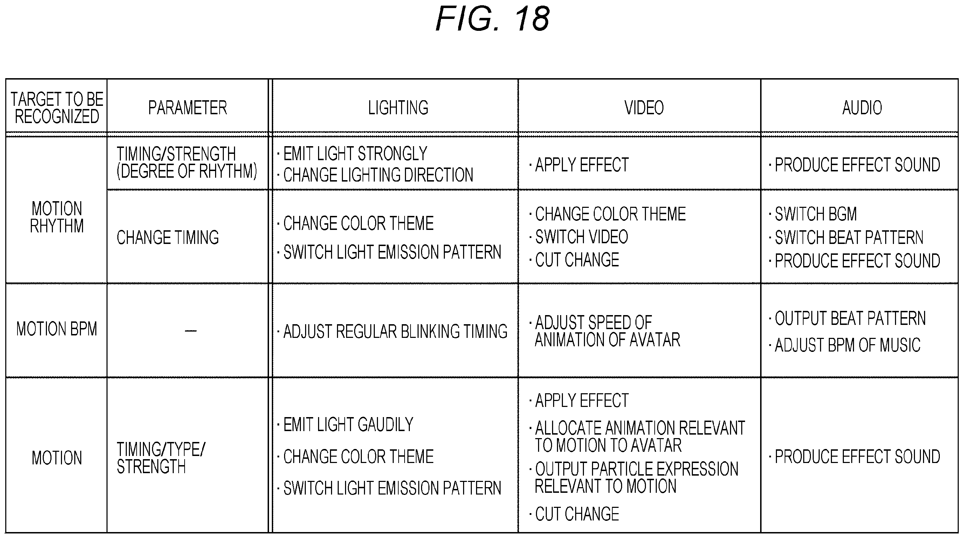

Here, a specific example of a production method will be described with reference to Fig. 18.

First, an example of the production method at a timing at which the user keeps motion rhythm will be described.

For example, the lighting control unit 171 causes the lighting equipment 155 to emit light strongly. In this event, the lighting control unit 171 may adjust a light amount on the basis of the degree of rhythm.

For example, the lighting control unit 171 changes a lighting direction of the lighting equipment 155. For example, the lighting control unit 171 causes the lighting direction of the lighting equipment 155 to swing from side to side, up and down, or the like. In this event, the lighting control unit 171 may adjust speed at which the lighting direction is changed on the basis of the degree of rhythm.

For example, the video control unit 172 applies effect to a video output from the video equipment 156. In this event, the video control unit 172 may adjust a type and intensity of the effect on the basis of the degree of rhythm.

For example, the audio control unit 173 causes effect sound to be produced by the audio equipment 157. In this event, the audio control unit 173 may adjust a type and intensity of the effect sound on the basis of the degree of rhythm.

Next, an example of the production method at a timing at which the motion rhythm of the user changes will be described.

For example, the lighting control unit 171 changes a color theme or a light emission pattern of the lighting equipment 155.

For example, the video control unit 172 changes a color theme of the video output from the video equipment 156, switches a video or performs cut change of a video.

For example, the audio control unit 173 switches back ground music (BGM) to be output from the audio equipment 157. Further, for example, the audio control unit 173 switches a beat pattern to be output from the audio equipment 157. Still further, for example, the audio control unit 173 causes effect sound to be produced from the audio equipment 157.

An example of a production method using motion BPM of the user will be described next.

For example, the lighting control unit 171 adjusts a regular blinking timing of light output from the lighting equipment 155 on the basis of the motion BPM. For example, the lighting control unit 171 adapts a regular timing of light output from the lighting equipment 155 to the motion BPM.

For example, the video control unit 172 adjusts speed of animation of an avatar output from the video equipment 156 on the basis of the motion BPM. For example, the video control unit 172 adapts the speed of animation of the avatar to the motion BPM.

For example, the audio control unit 173 causes a beat pattern of BPM which is the same as the motion BPM to be output from the audio equipment 157. Further, for example, the audio control unit 173 adjusts BPM of music to be output from the audio equipment 157. For example, the audio control unit 173 adapts the BPM of the music to the motion BPM.

An example of a production method using motion of the user will be described next.

For example, the lighting control unit 171 causes the lighting equipment 155 to emit light gaudily at a timing at which motion is made. In this event, the lighting control unit 171 may adjust color and intensity of light on the basis of the type and the strength of the motion.

For example, the lighting control unit 171 changes a color theme of the lighting equipment 155 at a timing at which the motion is made. In this event, the lighting control unit 171 may select a color theme on the basis of the type and the strength of the motion.

For example, the lighting control unit 171 changes a light emission pattern of the lighting equipment 155 at a timing at which the motion is made. In this event, the lighting control unit 171 may select a light emission pattern on the basis of the type and the strength of the motion.

For example, the video control unit 172 applies effect to a video output from the video equipment 156 at a timing at which the motion is made. In this event, the video control unit 172 may adjust a type and intensity of the effect on the basis of the type and the strength of the motion.

For example, the video control unit 172 allocates animation which is relevant to motion to an avatar to be output from the video equipment 156 at a timing at which the motion is made. For example, the video control unit 172 causes the avatar to make the same motion as the user.

For example, the video control unit 172 causes particle expression which is relevant to the motion to be output from the video equipment 156 at a timing at which the motion is made.

For example, the video control unit 172 performs cut change of the video to be output from the video equipment 156 at a timing at which the motion is made.

For example, the audio control unit 173 causes effect sound to be produced by the audio equipment 157. In this event, the audio control unit 173 may adjust a type and intensity of the effect sound on the basis of the type and the strength of the motion.

Returning to Fig. 17, then, the processing returns to step S61, and processing in step S61 and subsequent step is executed.

As described above, it is possible to perform effective production in accordance with the motion rhythm, the degree of rhythm, the motion BPM or the motion of the user during performance of the user. Further, for example, also in a case where the user performs performance without music, it is possible to perform effective production only on the basis of motion of the user.

<Modified example of first embodiment>

While, in the above description, an example has been described where performance by one user is produced, the present technology can be also applied to a case where performance by a plurality of users is produced.

In this case, for example, the wearable sensors 101-1 to 101-5, the communication unit 151, and the sensor synchronization unit 152 in Fig. 4 are provided for each user. Note that the communication unit 151 and the sensor synchronization unit 152 can be shared among a plurality of users. Further, for example, production control is performed using the above-described method on the basis of the motion rhythm, the degree of rhythm, the motion BPM or the motion of each user.

Further, the motion rhythm recognizing unit 161 may recognize a pattern of the motion rhythm which repeatedly appears by observing the motion rhythm for a long period. Then, production control may be performed using the pattern of the motion rhythm.

Further, for example, it is also possible to convert the acceleration data and the angular velocity data into skeleton information of a human body instead of inputting raw acceleration data and angular velocity data to the motion rhythm recognition model and the motion recognition model. Here, the skeleton information is, for example, expressed with positions of respective joints of the human body or the attitude.

Further, for example, it is also possible to construct the motion rhythm recognizing unit 161 without using machine learning.

For example, in a case where the norm of the acceleration data exceeds a predetermined threshold, the motion rhythm recognizing unit 161 may recognize that the user keeps motion rhythm. Further, for example, the motion rhythm recognizing unit 161 may detect a timing at which the norm of the acceleration data becomes a minimum and recognize that the user keeps motion rhythm at that timing. As the timing at which the norm of the acceleration data becomes a minimum, for example, a timing at which the motion of the user is at rest can be assumed.

Note that, in this example where machine learning is not used, in a case where the user wears a plurality of wearable sensors 101, for example, an average value, a maximum value, or the like, of the acceleration data of the respective wearable sensors 101 is used.

Further, in the present technology, production of performance is not necessarily performed on a stage where performance is performed or audience seats. For example, in a case where each audience watches performance via a spectacle type wearable device using augmented reality (AR), production may be performed by a video and sound of the wearable device of each audience being controlled.

<<2. Second embodiment>>

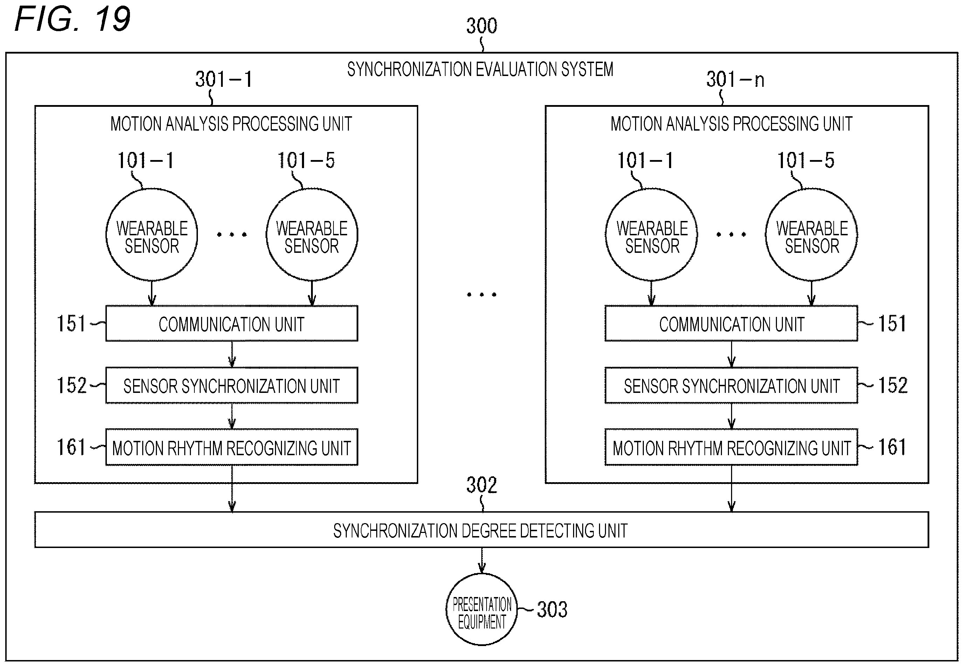

Next, a second embodiment of the present technology will be described with reference to Fig. 19 to Fig. 23.

<Configuration example of functions of synchronization evaluation system 300>

Fig. 19 illustrates a configuration example of functions of a synchronization evaluation system 300 to which the present technology is applied. Note that, in the drawing, the same reference numerals are assigned to portions corresponding to the portions in Fig. 4, and description thereof will be omitted as appropriate.

The synchronization evaluation system 300 is a system which evaluates a degree of synchronization indicating a degree of matching of rhythm of motion of a plurality of users. In other words, the synchronization evaluation system 300 is a system which evaluates a degree of matching (synchronization level) of the rhythm of motion among the plurality of users.

The synchronization evaluation system 300 includes motion analysis processing units 301-1 to 301-n, a synchronization degree detecting unit 302, and a presentation equipment 303.

The motion analysis processing units 301-1 to 301-n are respectively provided for the respective users who are targets of synchronization evaluation.

Note that, in a case where it is not necessary to individually distinguish among the motion analysis processing units 301-1 to 301-n, they will be simply referred to as a motion analysis processing unit 301.

Each of the motion analysis processing unit 301 includes wearable sensors 101-1 to 101-5, the communication unit 151, the sensor synchronization unit 152, and the motion rhythm recognizing unit 161.

The motion rhythm recognizing unit 161 performs processing of recognizing motion rhythm of the user on the basis of the motion detection data acquired from each of the wearable sensor 101 via the communication unit 151 and the sensor synchronization unit 152. The motion rhythm recognizing unit 161 supplies data indicating a recognition result of the motion rhythm of the user to the synchronization degree detecting unit 302.

The synchronization degree detecting unit 302 detects a degree of synchronization of the motion rhythm between users. The synchronization degree detecting unit 302 supplies data indicating the detected degree of synchronization to the presentation equipment 303.

The presentation equipment 303 presents the degree of synchronization of the motion rhythm between users using a video, sound, light, vibration, or the like.

Note that the communication unit 151, the sensor synchronization unit 152, and the motion rhythm recognizing unit 161 are not necessarily required to be provided for each of the motion analysis processing unit 301, and may be shared among a plurality of motion analysis processing units 301.

<Synchronization evaluation processing>

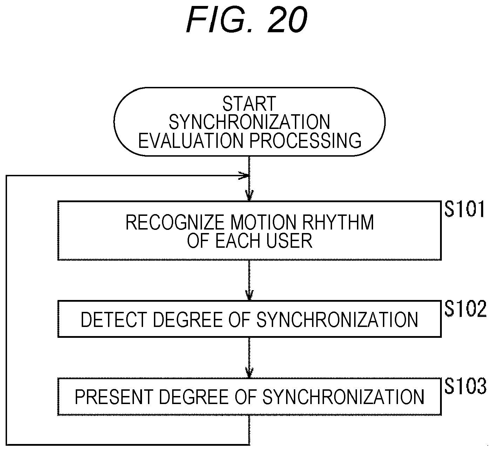

Synchronization evaluation processing to be executed by the synchronization evaluation system 300 will be described next with reference to a flowchart in Fig. 20.

This processing is, for example, started when a command for starting processing is input to the synchronization evaluation system 300 and ends when a command for finishing the processing is input.

In step S101, each of the motion analysis processing unit 301 recognizes motion rhythm of each user. Specifically, each of the motion rhythm recognizing unit 161 performs processing of recognizing motion rhythm of each user on the basis of the motion detection data supplied from each of the wearable sensor 101 via the communication unit 151 and the sensor synchronization unit 152 through processing similar to the processing in step S31 in Fig. 10 described above. Then, each of the motion rhythm recognizing unit 161 supplies rhythm timing data indicating a timing at which each user keeps the motion rhythm and rhythm degree data indicating a degree of rhythm to the synchronization degree detecting unit 302.

In step S102, the synchronization degree detecting unit 302 detects the degree of synchronization.

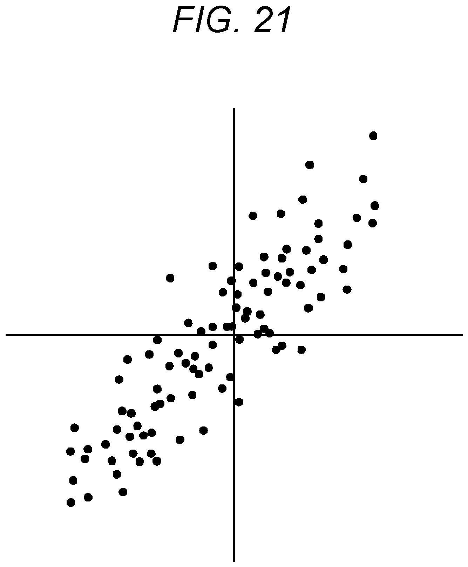

Here, an example of a method for detecting the degree of synchronization will be described with reference to Fig. 21 to Fig. 23.

First, an example where the degree of synchronization between two users is detected on the basis of correlation relationship between timings at which a user A and a user B keep motion rhythm will be described with reference to Fig. 21.

For example, the synchronization degree detecting unit 302 arranges the timing at which the user A keeps motion rhythm and the timing at which the user B keeps motion rhythm in chronological order. For example, the following Rhythm_A is a matrix in which time at which the user A keeps motion rhythm is arranged in chronological order, and Rhythm_B is a matrix in which time at which the user B keeps motion rhythm is arranged in chronological order.

Rhythm_A = [0.342, 0.628, 1.391, ...]
Rhythm_B = [0.322, 0.839, 1.458, ...]

Then, the synchronization degree detecting unit 302 pairs an element of Rhythm A and an element of Rhythm B whose time is close to each other among the respective elements of Rhythm A and the respective elements of Rhythm B. By this means, an array of Rhythm_Pair including a pair of (rhythm_a, rhythm_b) can be obtained. Note that rhythm_a indicates an element of Rhythm A, and rhythm b indicates an element of Rhythm_B.

Fig. 21 is a graph in which respective pairs constituting the array Rhythm Pair are plotted. A horizontal axis indicates time at which the user A keeps motion rhythm, and a vertical axis indicates time at which the user B keeps motion rhythm.

Then, the synchronization degree detecting unit 302 calculates a correlation coefficient between rhythm a and rhythm b of the array Rhythm_Pair. Then, the synchronization degree detecting unit 302 uses the calculated correlation coefficient as the degree of synchronization of rhythm timings between the user A and the user B.

Note that, also in a case where there are three or more users, it is possible to detect the degree of synchronization among all the users on the basis of correlation coefficients among the respective users. For example, it is possible to calculate a correlation coefficient between users for each of two users and detect an average value of the calculated correlation coefficients as the degree of synchronization among all users.

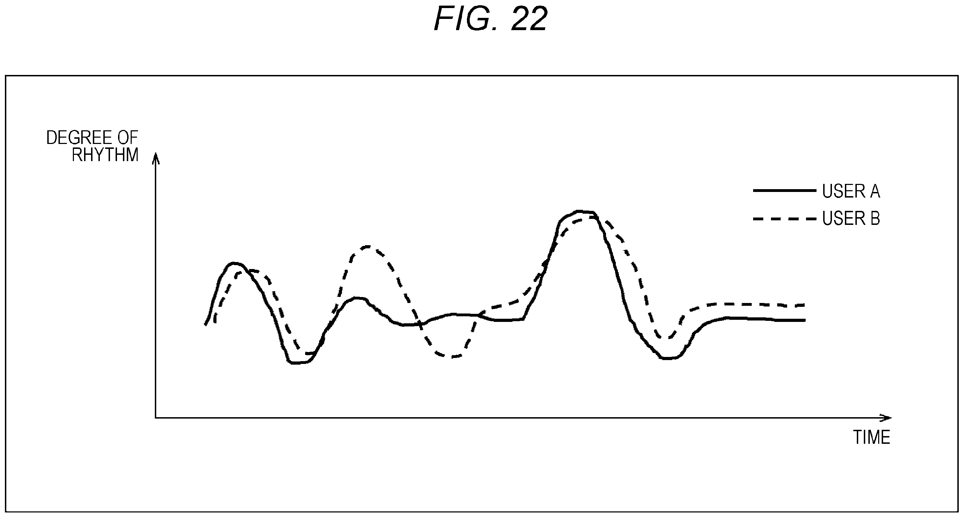

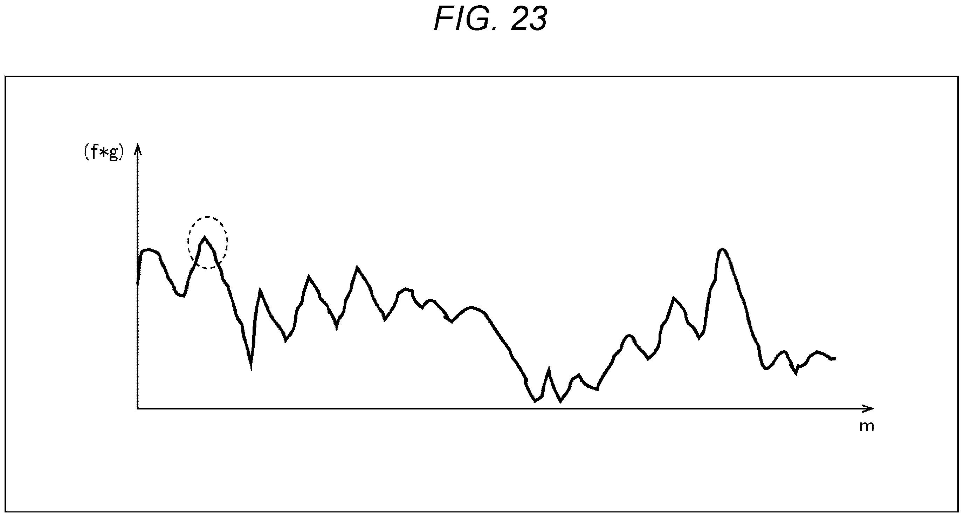

An example where the degree of synchronization is detected on the basis of the degrees of rhythm of the user A and the user B will be described next with reference to Figs. 22 and 23.

Fig. 22 is a graph indicating an example of the degrees of rhythm of the user A and the user B. A horizontal axis indicates time, and a vertical axis indicates the degree of rhythm. Further, a graph with a solid line indicates the degree of rhythm of the user A, and a graph with a dotted line indicates the degree of rhythm of the user B.

Then, the synchronization degree detecting unit 302 calculates mutual correlation between the degree of rhythm of the user A and the degree of rhythm of the user B using the following equation (1).

[Math. 1]

$$(f*g)(m) = \sum_n f(n)g(m-n) \qquad \cdots (1)$$

Note that f in equation (1) indicates a function indicating the degree of rhythm of the user A, and g indicates a function indicating the degree of rhythm of the user B. Further, m indicates a shift amount.

Fig. 23 illustrates an example of mutual correlation between the degree of rhythm of the user A and the degree of rhythm of the user B. A horizontal axis indicates the shift amount m, and a vertical axis indicates mutual correlation.

For example, the synchronization degree detecting unit 302 obtains a maximum value of mutual correlation between the degree of rhythm of the user A and the degree of rhythm of the user B as the degree of synchronization of the motion rhythm between the user A and the user B. For example, in the example in Fig. 23, a peak value of mutual correlation in a portion enclosed with a dotted circle is set as the degree of synchronization of the motion rhythm between the user A and the user B.

Further, for example, the synchronization degree detecting unit 302 can detect the shift amount m when the mutual correlation of the degree of rhythm between the user A and the user B becomes a maximum as a gap of the motion rhythm between the user A and the user B.

Note that, also in a case where there are three or more users, it is possible to detect the degree of synchronization among all the users on the basis of mutual correlation among the respective users. For example, it is possible to calculate a mutual correlation between users for each of two users and detect an average value of the calculated mutual correlation as the degree of synchronization among all users.

The synchronization degree detecting unit 302 supplies synchronization degree data indicating the detected degree of synchronization to the presentation equipment 303.

In step S103, the presentation equipment 303 presents the degree of synchronization.

Note that an arbitrary method can be used as a presentation method of the degree of synchronization. For example, the presentation equipment 303 presents a specific numerical value of the degree of synchronization using an image or sound. Further, for example, the presentation equipment 303 presents the degree of synchronization using a type, a volume or speed of effect sound, intensity or color of light, or intensity or speed of vibration.

Thereafter, the processing returns to step S101, and processing in step S101 and subsequent step is executed.

As described above, the degree of synchronization of motion rhythm among a plurality of users can be accurately and easily detected.

Further, for example, by the degree of synchronization being presented to each user in real time, each user can improve performance of dance, or the like, so as to increase the degree of synchronization.

<Modified example of second embodiment>

For example, it is also possible to recognize motion rhythm for each portion (such as, for example, the head, the hands, the feet, and the waist) of each user, and detect the degree of synchronization of motion rhythm among portions of a plurality of users.

Further, for example, in the above-described first embodiment, the degree of synchronization may be used in production control of performance in which each user takes part. Here, the performance in which each user takes part includes a case where each user takes part in the performance as a performer and a case where each user takes part in the performance as an audience.

In a case where each user takes part in the performance as a performer, for example, in a case where the degree of synchronization of each performer exceeds a predetermined threshold, or in a case where the number of times (firing rate) that the degree of synchronization exceeds a reference value exceeds a predetermined threshold within a predetermined period, various kinds of production are performed.

Meanwhile, in a case where each user takes part in the performance as an audience, for example, the wearable sensor 101 is worn by each audience. Then, for example, in a case where the degree of synchronization of motion rhythm of the respective audience exceeds a predetermined threshold, or in a case where a firing rate of the degree of synchronization exceeds a predetermined threshold within a predetermined period, various kinds of production are performed.

Further, for example, in place of the degree of synchronization or in addition to the degree of synchronization, it is also possible to use the degree of rhythm of each user in production control of the performance in which each user takes part.

In a case where each user takes part in the performance as a performer, for example, in a case where the total degree of rhythm of each performer exceeds a predetermined threshold, or in a case where the number of times (firing rate) that the total degree of rhythm of each performer exceeds a predetermined reference value exceeds a predetermined threshold within a predetermined period, various kinds of production are performed.

On the other hand, in a case where each user takes part in the performance as an audience, for example, in a case where the total degree of rhythm of each audience exceeds a predetermined threshold, or in a case where the firing rate of the degree of rhythm of each audience exceeds a predetermined threshold within a predetermined period, various kinds of production are performed.

Note that, by producing performance on the basis of the degree of synchronization or the degree of rhythm of the audience, it is possible to reflect a sense of unity or enthusiasm of the site to production. As a result, it is possible to further increase a sense of unity and enthusiasm of the site.

<<3. Third embodiment>>

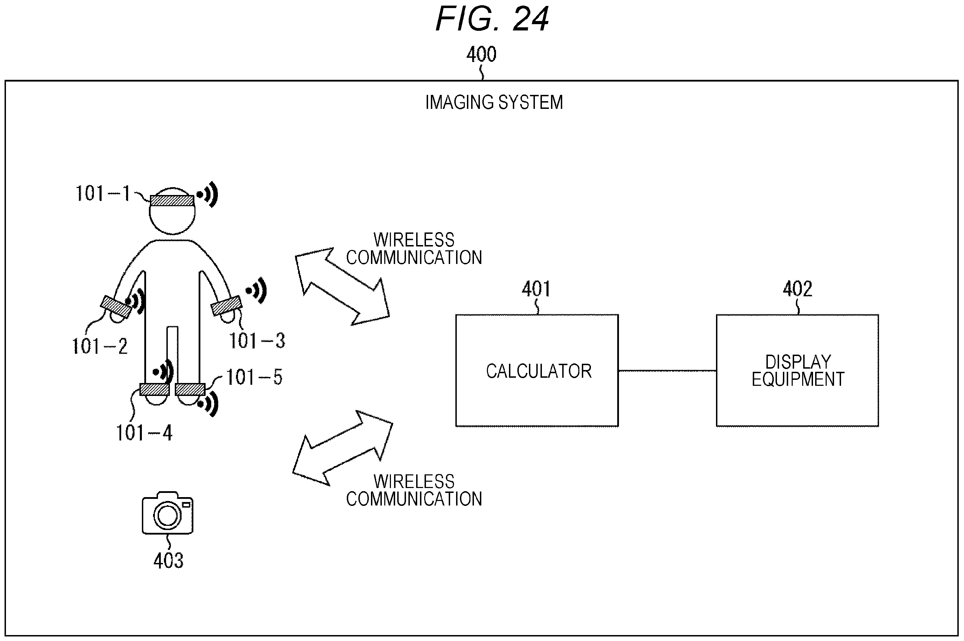

Next, a third embodiment of the present technology will be described with reference to Fig. 24 to Fig. 30.

<Configuration example of hardware of imaging system 400>

Fig. 24 illustrates a configuration example of hardware of an imaging system 400 to which the present technology is applied. Note that, in the drawing, the same reference numerals are assigned to portions corresponding to the portions in Fig. 1, and description thereof will be omitted as appropriate.

The imaging system 400 includes the wearable sensors 101-1 to 101-5, a calculator 401, display equipment 402, and an imaging unit 403.

Each of the wearable sensor 101 transmits communication packets including the motion detection data to the calculator 401.

The calculator 401 controls capturing an image of the user by the imaging unit 403 on the basis of the motion detection data, and receives an image obtained as a result of image capturing. Further, the calculator 401 controls display of the captured image of the user, by the display equipment 402.

The display equipment 402 includes, for example, a projector, a monitor, or the like, and displays an image under control by the calculator 401.

The imaging unit 403 includes one or more cameras. The imaging unit 403 captures an image of the user under control by the calculator 401 and transmits the image obtained as a result of image capturing to the calculator 401.

Note that, in communication between each of the wearable sensor 101 and the calculator 401, for example, an arbitrary scheme of low-delay near field communication is employed. By employing near field communication, it is possible to reduce power consumption of the wearable sensor 101 and make a size of the wearable sensor 101 smaller.

In communication between the calculator 401 and the imaging unit 403, for example, an arbitrary scheme of wireless communication is employed.

Note that, for example, the calculator 401 and the display equipment 402 may be constituted with one device, or the calculator 401 and the imaging unit 403 may be constituted with one device. Further, for example, the calculator 401, the display equipment 402, and the imaging unit 403 may be constituted with one device.

<Configuration example of functions of imaging system 400>

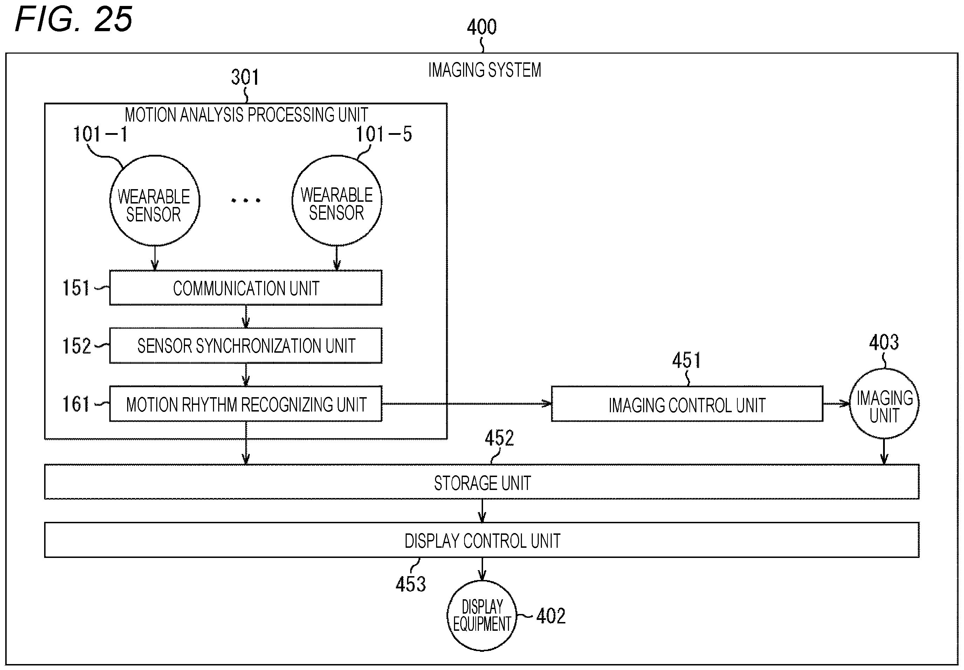

Fig. 25 illustrates a configuration example of functions of the imaging system 400.

Note that, in the drawing, the same reference numerals are assigned to portions corresponding to the portions in Figs. 19 and 24, and description thereof will be omitted.

The imaging system 400 includes a motion analysis processing unit 301, the display equipment 402, the imaging unit 403, an imaging control unit 451, a storage unit 452, and a display control unit 453. The motion analysis processing unit 301 includes wearable sensors 101-1 to 101-5, the communication unit 151, the sensor synchronization unit 152, and the motion rhythm recognizing unit 161.

The motion rhythm recognizing unit 161 performs processing of recognizing motion rhythm of the user on the basis of the motion detection data acquired from each of the wearable sensor 101 via the communication unit 151 and the sensor synchronization unit 152. The motion rhythm recognizing unit 161 supplies data indicating a recognition result of the motion rhythm of the user to the imaging control unit 451 and causes the data to be stored in the storage unit 452.

The imaging control unit 451 controls image capturing of the imaging unit 403. For example, the imaging control unit 451 controls an image capturing timing of the imaging unit 403 on the basis of a recognition result of the motion rhythm of the user.

The imaging unit 403 causes the image obtained as a result of image capturing to be stored in the storage unit 452.

The display control unit 453 controls display of the image stored in the storage unit 452 by the display equipment 402 on the basis of the recognition result of the motion rhythm of the user.

<Processing of imaging system 400>

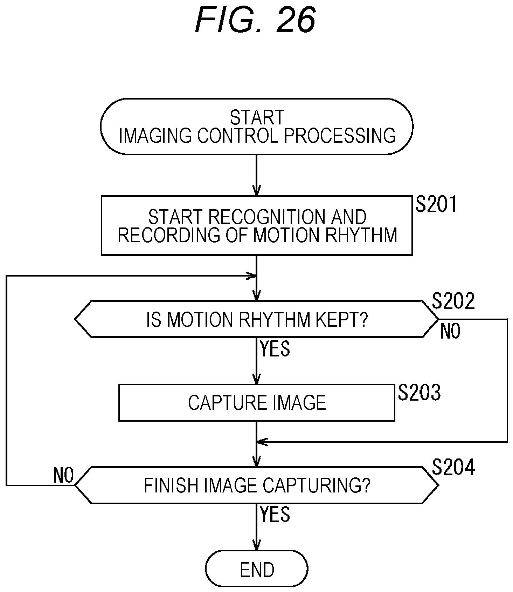

Processing of the imaging system 400 will be described next with reference to Fig. 26 to Fig. 30.

<Imaging control processing>

Imaging control processing to be executed by the imaging system 400 will be described next with reference to a flowchart in Fig. 26.

This processing is, for example, started when a command for starting image capturing is input to the imaging system 400.

In step S201, the motion rhythm recognizing unit 161 starts recognition and recording of motion rhythm. Specifically, each of the motion rhythm recognizing unit 161 starts processing of recognizing motion rhythm of the user on the basis of the motion detection data supplied from each of the wearable sensor 101 via the communication unit 151 and the sensor synchronization unit 152 through processing similar to the processing in step S31 in Fig. 10 described above. Further, the motion rhythm recognizing unit 161 starts supplying rhythm timing data indicating a timing at which the user keeps the motion rhythm and rhythm degree data indicating a degree of rhythm to the storage unit 452, and make the storage unit 452 to store the data.

In step S202, similar to the processing in step S32 in Fig. 10, whether or not motion rhythm is kept is determined. In a case where it is determined that motion rhythm is kept, the processing proceeds to step S203.

In step S203, the imaging system 400 captures an image. Specifically, the motion rhythm recognizing unit 161 supplies rhythm timing data indicating a timing at which the user keeps the motion rhythm to the imaging control unit 451.

The imaging unit 403 captures an image of the user in synchronization with the timing at which the user keeps the motion rhythm under control by the imaging control unit 451 and causes the image obtained as a result of image capturing to be stored in the storage unit 452.

In step S204, the imaging system 400 determines whether or not to finish image capturing. In a case where it is determined not to finish image capturing, the processing returns to step S202.

Thereafter, in step S204, until it is determined to finish image capturing, the processing from step S202 to step S204 is repeatedly executed.

Meanwhile, in step S204, for example, in a case where a command for finishing image capturing is input, the imaging system 400 determines to finish image capturing, and imaging control processing is finished.

<Display control processing>

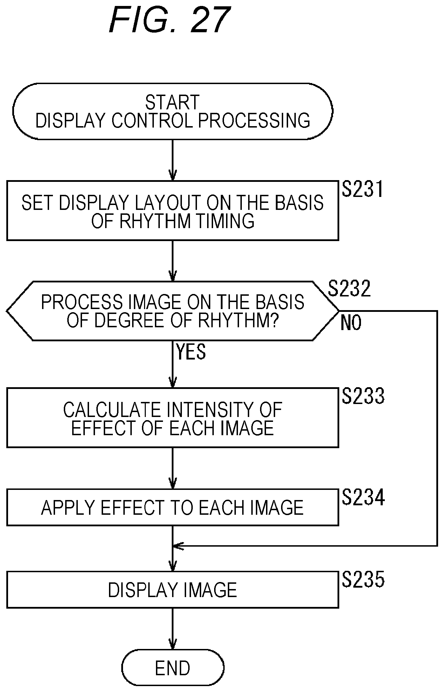

Next, display control processing to be executed by the imaging system 400 will be described next with reference to a flowchart in Fig. 27.

This processing is, for example, started when a command for displaying image is input to the imaging system 400.

In step S231, the display control unit 453 sets display layout on the basis of a rhythm timing.

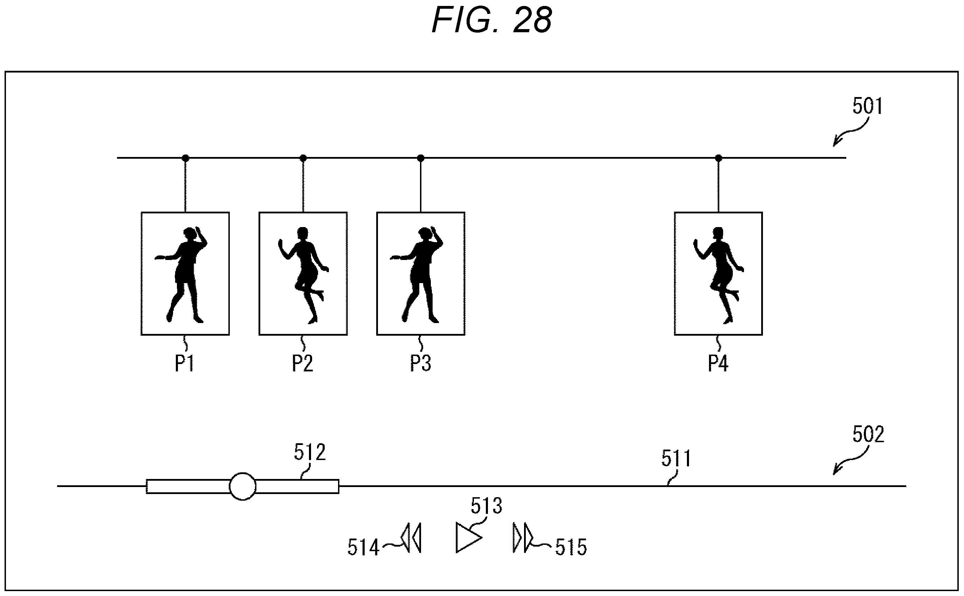

Note that a specific example of the display layout will be described later with reference to Fig. 28 to Fig. 30.

In step S232, the display control unit 453 determines whether or not to process an image on the basis of the degree of rhythm. For example, in a case where setting for processing an image on the basis of the degree of rhythm is put into an on state, the display control unit 453 determines to process an image on the basis of the degree of rhythm, and the processing proceeds to step S233.

In step S233, the display control unit 453 calculates intensity of effect of each image. Specifically, the display control unit 453 detects the degree of rhythm of the user when each image is captured, on the basis of the rhythm degree data stored in the storage unit 452 and calculates intensity of effect to be applied to each image on the basis of the detected degree of rhythm. For example, the intensity of effect is set at a value obtained by multiplying the degree of rhythm by a predetermined constant.

In step S234, the display control unit 453 applies effect to each image stored in the storage unit 452 on the basis of the calculated intensity of effect.

Thereafter, the processing proceeds to step S235.

Meanwhile, in step S232, for example, in a case where setting for processing an image on the basis of the degree of rhythm is put into an off state, the display control unit 453 determines not to process the image on the basis of the degree of rhythm, the processing in step S233 and step S234 is skipped, and the processing proceeds to step S235.

In step S235, the display equipment 402 displays the image under control by the display control unit 453.

Thereafter, the display control processing is finished.

Here, an example of a display screen to be displayed at the display equipment 402 in this processing will be described with reference to Fig. 28 to Fig. 30.

Fig. 28 illustrates an example of a display screen in a case where the image is not processed on the basis of the degree of rhythm.

The display screen in Fig. 28 is roughly divided into an image display portion 501 in an upper part of the screen and an operation portion 502 in a lower part of the screen.

At the image display portion 501, images when the user keeps motion rhythm (hereinafter, referred to as rhythm timing images) are arranged and displayed in chronological order. In this example, rhythm timing images P1 to P4 are arranged and displayed from left to right in order of time at which the images are captured. Further, an interval between the respective rhythm timing images is adjusted on the basis of an interval of time at which the user actually keeps motion rhythm.

For example, in a case where one of the rhythm timing images P1 to P4 is selected, the selected rhythm timing image is enlarged and displayed clearly. In this event, for example, it is also possible to allow the selected rhythm timing image to be stored or shared.

At the operation portion 502, a seek bar 511, a slider 512, a reproduction button 513, a fast-rewind button 514, and a fast-forward button 515 are displayed.

A width of the slider 512 indicates a rough indication of a temporal range of the rhythm timing image displayed at the image display portion 501. A circle at the center of the slider 512 indicates a rough indication of time at which the rhythm timing image displayed at substantially the center of the image display portion 501 is captured. Further, by the slider 512 being slid to left or right on the seek bar 511 indicating a time axis, the temporal range of the rhythm timing image displayed at the image display portion 501 is adjusted. If the slider 512 is slid to left, the temporal range of the rhythm timing image displayed at the image display portion 501 is returned. Meanwhile, if the slider 512 is slid to right, the temporal range of the rhythm timing image displayed at the image display portion 501 progresses.

If the reproduction button 513 is depressed, automatic reproduction of the rhythm timing image is started. For example, only the rhythm timing image which is captured around time corresponding to a portion of the circle at the center of the slider 512 is largely displayed in the display screen. Then, the rhythm timing image to be displayed within the display screen is made to automatically advance one frame by one at predetermined intervals in chronological order. In this event, if the fast-rewind button 514 is depressed, the rhythm timing image displayed at the image display portion 501 is fast-rewound. Meanwhile, if the fast-forward button 515 is depressed, the rhythm timing image displayed at the image display portion 501 is fast-forwarded.

Note that, in a case where the reproduction button 513 is depressed, the rhythm timing image displayed at the image display portion 501 may be scrolled in a left direction (in a direction in which time progresses) while the layout in Fig. 28 is kept.

Further, for example, it is also possible to increase or reduce a size of the displayed image by pinch operation being performed on the display screen.

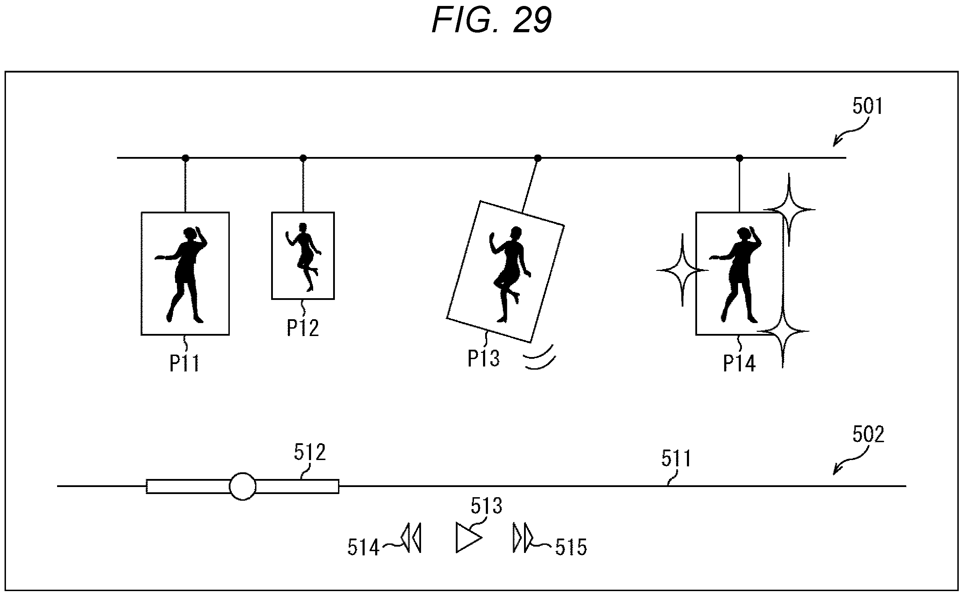

Fig. 29 illustrates an example of the display screen in a case where the image is processed on the basis of the degree of rhythm. Note that, in the drawing, the same reference numerals are assigned to portions corresponding to the portions in Fig. 28, and description thereof will be omitted as appropriate.

The display screen in Fig. 29 is divided into the image display portion 501 and the operation portion 502 in a similar manner to the display screen in Fig. 28. The operation portion 502 has a similar configuration to that of the operation portion 502 in the display screen in Fig. 28. Meanwhile, the operation portion 502 in Fig. 29 is different from the operation portion 502 in Fig. 28 in that effect is applied to the rhythm timing image displayed at the image display portion 501.

Specifically, in this example, rhythm timing images P11 to P14 are displayed at the image display portion 501.

For example, as in the rhythm timing image P12, a size of the image changes on the basis of the degree of rhythm. For example, as the degree of rhythm of the user when the rhythm timing image is captured is larger, the size of the image becomes larger, while, as the degree of rhythm is smaller, the size of the image becomes smaller.

For example, as in the rhythm timing image P13, the image swings from side to side like a pendulum on the basis of the degree of rhythm. For example, as the degree of rhythm of the user when the rhythm timing image is captured is larger, a swing width of the image becomes larger, while, as the degree of rhythm is smaller, the swing width of the image becomes smaller.

For example, as in the rhythm timing image P14, particles are displayed around the image on the basis of the degree of rhythm. For example, as the degree of rhythm of the user when the rhythm timing image is captured is larger, the number of particles becomes larger or the particles become brighter. Meanwhile, as the degree of rhythm of the user when the rhythm timing image is captured is smaller, the number of particles becomes smaller or the particles become darker.

Note that, while, in the above description, an example where an image is captured when the user keeps motion rhythm has been described, for example, it is also possible to always capture an image of the user and process and display the captured image (moving image) on the basis of the rhythm timing and the degree of rhythm later.

In this case, for example, in a case where one rhythm timing image is selected from the rhythm timing images P1 to P14 in the display screen in Fig. 28 or Fig. 29, a moving image within a predetermined period based on the selected rhythm timing image may be reproduced. Further, for example, moving images around the respective rhythm timing images may be able to be continuously reproduced (digest may be reproduced) in chronological order.

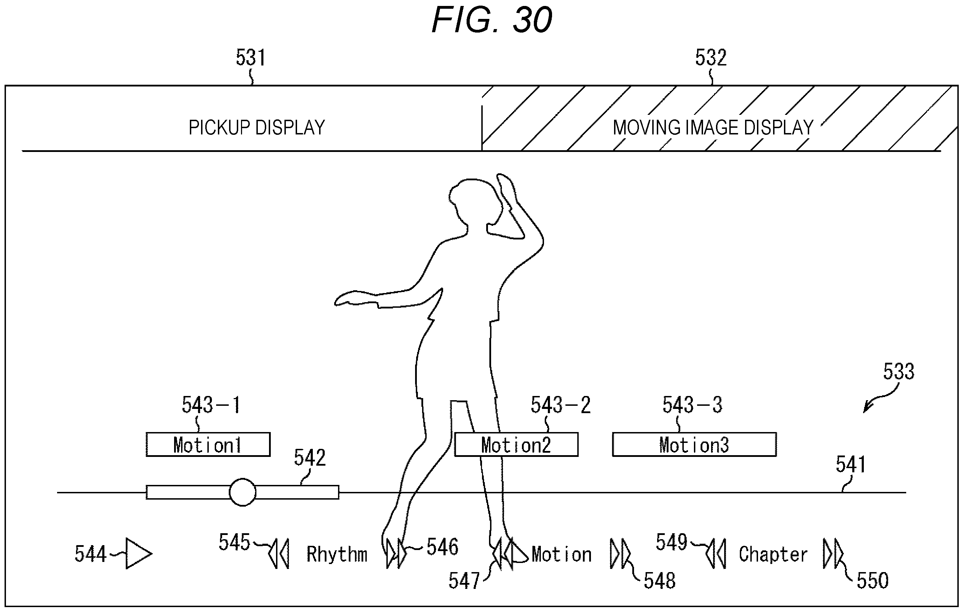

Further, for example, as in the display screen in Fig. 30, display may be able to be switched between pickup display and moving image display.

Specifically, a pickup display tab 531 and a moving image display tab 532 are displayed at an upper end of the display screen in Fig. 30. In this example, a case is illustrated where the moving image display tab 532 is selected. Note that, in a case where the pickup display tab 531 is selected, for example, the display screen in Fig. 28 or Fig. 29 described above is displayed below the pickup display tab 531 and the moving image display tab 532.

In a case where the moving image display tab 532 is selected, the captured moving image of the user is displayed below the pickup display tab 531 and the moving image display tab 532. Further, an operation portion 533 is displayed in a manner superimposed on the moving image.

At the operation portion 533, a seek bar 541, a slider 542, motion buttons 543-1 to 543-3, a reproduction button 544, a fast-rewind button 545, a fast-forward button 546, a fast-rewind button 547, a fast-forward button 548, a fast-rewind button 549, and a fast-forward button 550 are displayed.

The seek bar 541 and the slider 542 are similar to the seek bar 511 and the slider 512 in Figs. 28 and 29. If the slider 542 is slid to left on the seek bar 541, a reproduction position of the moving image is returned in a time axis direction. Meanwhile, if the slider 542 is slid to right on the seek bar 541, the reproduction position of the moving image progresses in the time axis direction.

The motion buttons 543-1 to 543-3 indicate temporal positions of the detected motion. Note that, actually, types of the detected motion is displayed within the motion buttons 543-1 to 543-3. Then, if one of the motion buttons 543-1 to 543-3 is selected, reproduction of the moving image is started from a portion of the selected motion.

Note that, for example, a function for repeatedly reproducing the moving image of the portion of the selected motion may be provided.

If the reproduction button 544 is depressed, reproduction of the moving image is started.

If the fast-rewind button 545 is depressed, the reproduction position of the moving image is returned to the previous rhythm timing. Meanwhile, if the fast-forward button 546 is depressed, the reproduction position of the moving image is advanced to the next rhythm timing.

If the fast-rewind button 547 is depressed, the reproduction position of the moving image is returned to the beginning of the previous motion. Meanwhile, if the fast-forward button 548 is depressed, the reproduction position of the moving image is advanced to the beginning of the next motion.

If the fast-rewind button 549 is depressed, the reproduction position of the moving image is returned to the beginning of the previous chapter. Meanwhile, if the fast-forward button 550 is depressed, the reproduction position of the moving image is advanced to the beginning of the next chapter.

Note that chapters are separated, for example, for each section in which the rhythm pattern of the user is substantially constant, or for each section in which the motion BPM of the user is substantially constant.

As described above, it is possible to easily capture and display an image at a timing at which the user keeps motion rhythm.

Further, when the user keeps motion rhythm, for example, the user is often at rest or holds his/her pose. Therefore, by capturing am image when the user keeps motion rhythm, even if the user moves, it is possible to capture a great-looking image of the user without blurring.

<Modified example of third embodiment>

For example, by applying a third embodiment to the first embodiment, it is possible to capture an image of the user every time the user keeps motion rhythm while the user gives performance. Then, for example, it is possible to put a series of the captured images into an album, and distribute the album to the user.

<<4. Fourth embodiment>>

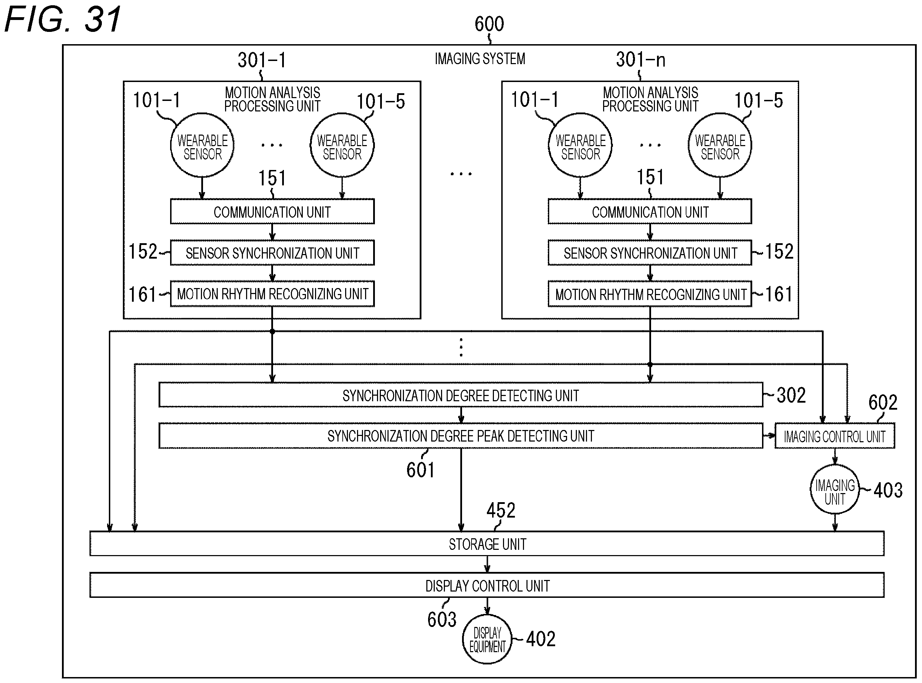

Next, a fourth embodiment of the present technology will be described with reference to Fig. 31 to Fig. 36.

<Configuration example of function of imaging system 600>

Fig. 31 illustrates a configuration example of function of an imaging system 600 to which the present technology is applied. Note that, in the drawing, the same reference numerals are assigned to portions corresponding to the portions in Figs. 19 and 25, and description thereof will be omitted as appropriate.

The imaging system 600 includes motion analysis processing units 301-1 to 301-n, a synchronization degree detecting unit 302, the display equipment 402, the imaging unit 403, the storage unit 452, a synchronization degree peak detecting unit 601, an imaging control unit 602, and a display control unit 603.

The motion rhythm recognizing unit 161 in each of the motion analysis processing unit 301 performs processing of recognizing motion rhythm of each user on the basis of the motion detection data acquired from each of the wearable sensor 101 via the communication unit 151 and the sensor synchronization unit 152. The motion rhythm recognizing unit 161 supplies data indicating a recognition result of the motion rhythm of the user to the synchronization degree detecting unit 302 and the imaging control unit 602.

The synchronization degree peak detecting unit 601 detects a peak of the degree of synchronization of motion between users, detected by the synchronization degree detecting unit 302. The synchronization degree peak detecting unit 601 supplies data indicating a detection result of the peak of the degree of synchronization to the imaging control unit 602. Further, the synchronization degree peak detecting unit 601 causes data indicating the detection result of the degree of synchronization and the peak of the degree of synchronization to be stored in the storage unit 452.

The imaging control unit 602 controls image capturing of the imaging unit 403. For example, the imaging control unit 602 controls an image capturing timing of the imaging unit 403 on the basis of a recognition result of the motion rhythm of each user recognized by each of the motion rhythm recognizing unit 161. Further, for example, the imaging control unit 602 controls the image capturing timing of the imaging unit 403 on the basis of the peak of the degree of synchronization of the motion rhythm between users detected by the synchronization degree peak detecting unit 601.

The display control unit 603 controls display by the display equipment 402 of the image stored in the storage unit 452 on the basis of the recognition result of the motion rhythm of each user and the peak of the degree of synchronization of the motion rhythm between users.

<Processing of imaging system 600>

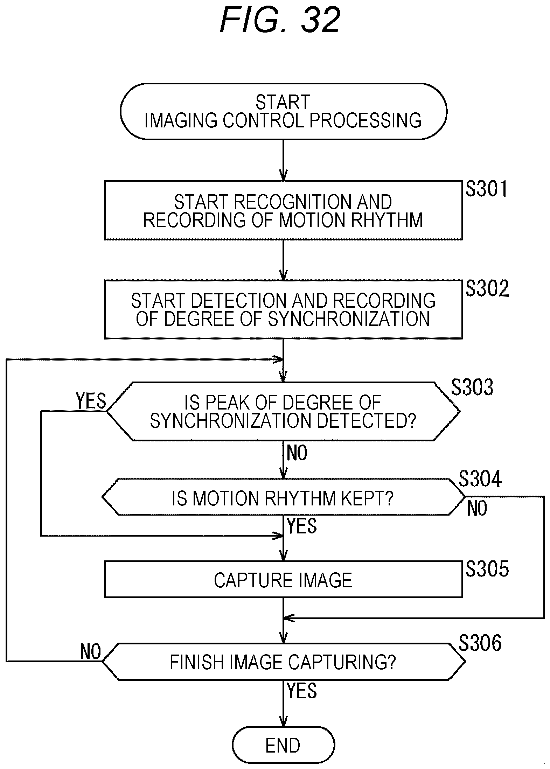

Processing of the imaging system 600 will be described next with reference to Fig. 32 to Fig. 36.

<Imaging control processing>

Imaging control processing to be executed by the imaging system 600 will be described next with reference to a flowchart in Fig. 32.

This processing is, for example, started when a command for starting image capturing is input to the imaging system 600.

In step S301, the motion rhythm recognizing unit 161 of each of the motion analysis processing unit 301 starts recognition and recording of motion rhythm. Specifically, each of the motion rhythm recognizing unit 161 starts processing of recognizing motion rhythm of each user on the basis of the motion detection data supplied from each of the wearable sensor 101 via the communication unit 151 and the sensor synchronization unit 152 through processing similar to the processing in step S31 in Fig. 10 described above. Further, each of the motion rhythm recognizing unit 161 starts supplying rhythm timing data indicating a timing at which each user keeps the motion rhythm and rhythm degree data indicating a degree of rhythm to the storage unit 452, and make the storage unit 452 to store the data.

In step S302, the imaging system 600 starts detection and recording of the degree of synchronization. Specifically, the synchronization degree detecting unit 302 starts processing of detecting the degree of synchronization of the motion rhythm between respective users using processing similar to that in step S102 in Fig. 20. Further, the synchronization degree detecting unit 302 starts processing of supplying the synchronization degree data indicating the detected degree of synchronization to the synchronization degree peak detecting unit 601.

The synchronization degree peak detecting unit 601 starts processing of detecting the peak of the degree of synchronization. Further, the synchronization degree peak detecting unit 601 starts processing of causing the synchronization degree data to which the detection result of the peak of the degree of synchronization is added to be stored in the storage unit 452.

In step S303, the synchronization degree peak detecting unit 601 determines whether or not the peak of the degree of synchronization is detected. In a case where it is determined that the peak of the degree of synchronization is not detected, the processing proceeds to step S304.

In step S304, each of the motion rhythm recognizing unit 161 determines whether or not motion rhythm is kept. In a case where one or more of the motion rhythm recognizing units 161 determines that the motion rhythm is kept, the processing proceeds to step S305.

Meanwhile, in step S303, in a case where it is determined that the peak of the degree of synchronization is detected, the processing in step S304 is skipped, and the processing proceeds to step S305.

In step S305, the imaging system 600 captures an image.

Specifically, in a case where each of the motion rhythm recognizing unit 161 detects that the motion rhythm is kept, each of the motion rhythm recognizing unit 161 supplies rhythm timing data indicating a timing at which the user keeps motion rhythm to the imaging control unit 602. Further, in a case where the synchronization degree peak detecting unit 601 detects the peak of the degree of synchronization, the synchronization degree peak detecting unit 601 notifies the imaging control unit 602 of synchronization degree peak detection data indicating that the peak of the degree of synchronization is detected.

The imaging unit 403 captures an image of the user in synchronization with a timing at which one or more users keep motion rhythm, or a timing at which the degree of synchronization of motion rhythm between respective users becomes a peak, and causes the image obtained as a result of image capturing to be stored in the storage unit 452 under control by the imaging control unit 602.

Note that the imaging unit 403 may capture an image of all the users at one time or individually capture images of the respective users. In the latter case, for example, the imaging unit 403 may capture an image of only a user who keeps motion rhythm, or may also capture an image of users who do not keep motion rhythm. Further, in the latter case, the imaging unit 403 may capture images of the users one by one, or may divide the users into a plurality of groups including one or more users and may capture images for each group.

Thereafter, the processing proceeds to step S306.

Meanwhile, in step S304, in a case where all the motion rhythm recognizing units 161 determine that motion rhythm is not kept, the processing in step S305 is skipped, and the processing proceeds to step S306. That is, in a case where the peak of the degree of synchronization is not detected and no user keeps motion rhythm, an image is not captured.

In step S306, it is determined whether or not to finish image capturing in a similar manner to the processing in step S204 in Fig. 26. In a case where it is determined not to finish image capturing, the processing returns to step S303.

Thereafter, in step S306, until it is determined to finish image capturing, the processing from step S303 to step S306 is repeatedly executed.

Meanwhile, in step S306, in a case where it is determined to finish image capturing, the imaging control processing is finished.

<Display control processing>

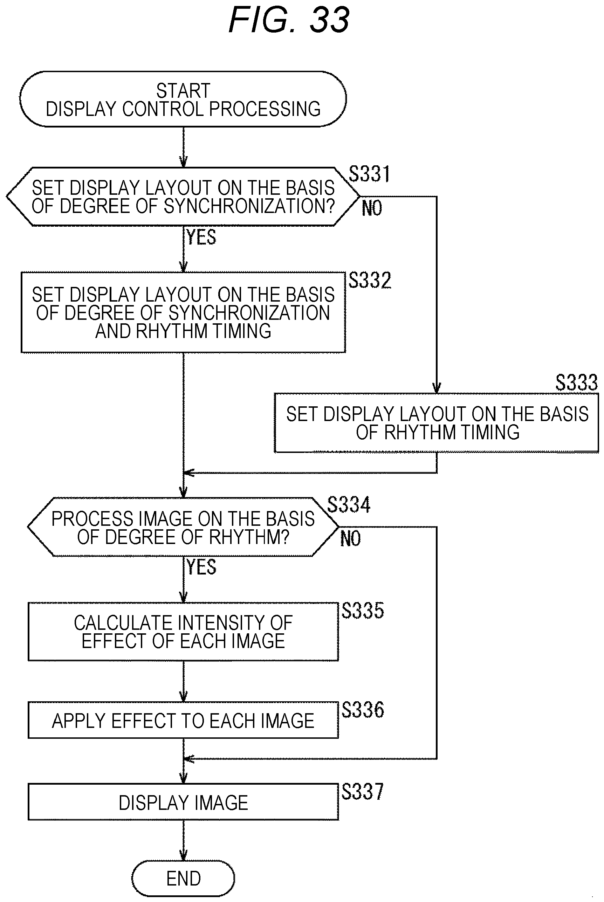

Next, display control processing to be executed by the imaging system 600 will be described next with reference to a flowchart in Fig. 33.

This processing is, for example, started when a command for displaying image is input to the imaging system 600.

In step S331, the display control unit 603 determines whether or not to set display layout on the basis of the degree of synchronization. For example, in a case where setting for setting the display layout on the basis of the degree of synchronization is put into an on state, the display control unit 603 determines to set the display layout on the basis of the degree of synchronization, and the processing proceeds to step S332.

In step S332, the display control unit 603 sets display layout on the basis of the degree of synchronization and the rhythm timing.

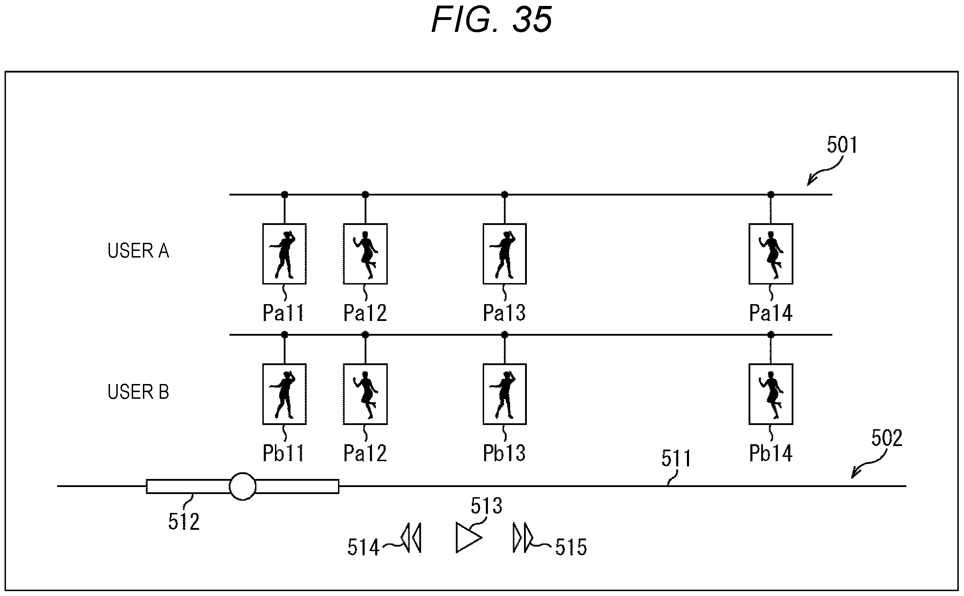

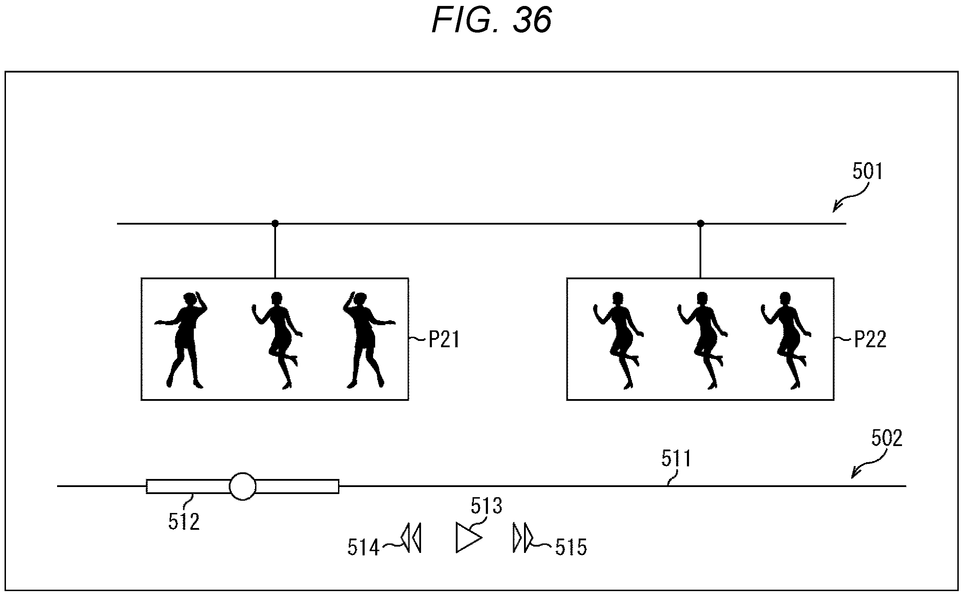

Note that a specific example of the display layout will be described later with reference to Figs. 35 and 36.

Thereafter, the processing proceeds to step S334.

On the other hand in step S331, for example, in a case where setting for setting the display layout on the basis of the degree of synchronization is put into an off state, the display control unit 603 determines not to set the display layout on the basis of the degree of synchronization, and the processing proceeds to step S333.

In step S333, the display control unit 603 sets the display layout on the basis of the rhythm timing. That is, unlike with the processing in step S332, only the rhythm timing is used for setting of the display layout, and the degree of synchronization is not used.

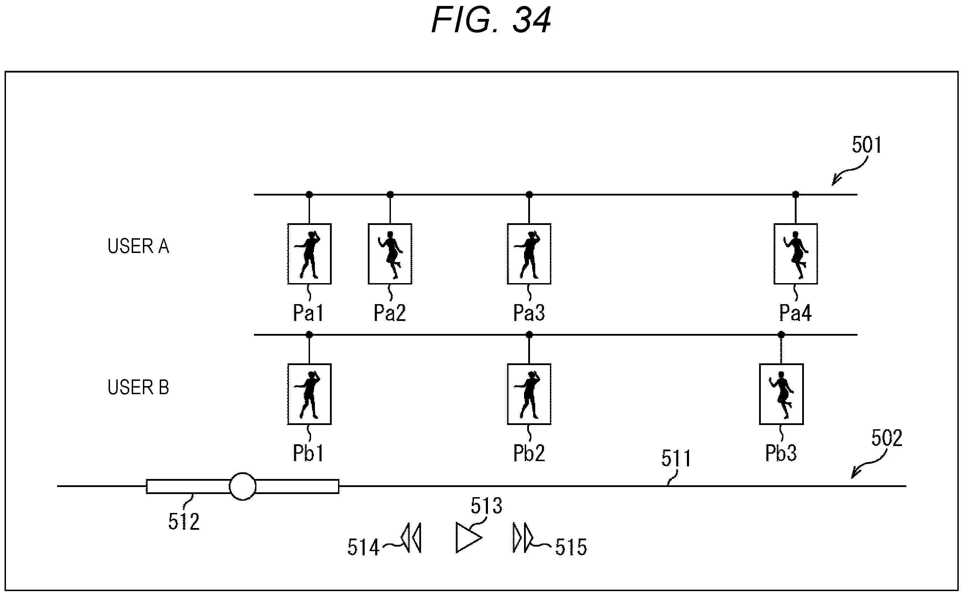

Note that a specific example of the display layout will be described later with reference to Fig. 34.

Thereafter, the processing proceeds to step S334.

In step S334 to step S336, processing similar to that in step S232 to step S234 in Fig. 27 is executed.

In step S337, the display equipment 402 displays the image under control by the display control unit 603.

Thereafter, the display control processing is finished.

Here, an example of a display screen to be displayed at the display equipment 402 in this processing will be described with reference to Fig. 34 to Fig. 36. Note that, in the drawing, the same reference numerals are assigned to portions corresponding to the portions in Figs. 28 and 29, and description thereof will be omitted.

Fig. 34 illustrates an example in a case where the image is displayed on the basis of only the rhythm timing without using the degree of synchronization.

The display screen in Fig. 34 is, similar to the display screen in Figs. 28 and 29, roughly divided into an image display portion 501 in an upper part of the screen and an operation portion 502 in a lower part of the screen. The configuration of the operation portion 502 is similar to the display screen in Figs. 28 and 29.

Meanwhile, at the image display portion 501, rhythm timing images of two users of the user A and the user B are vertically arranged and displayed. Display layout of the rhythm timing image of each user is similar to that in the display screen in Fig. 28. That is, rhythm timing images Pa1 to Pa4 of the user A are arranged and displayed in chronological order. Further, rhythm timing images Pb1 to Pb3 of the user B are arranged and displayed in chronological order.

The rhythm timing image Pa1 and the rhythm timing image Pb1 which are vertically arranged, and the rhythm timing image Pa3 and the rhythm timing image Pb2 which are vertically arranged, are images captured at substantially the same time. It can be understood from this that timings at which the user A and the user B keep motion rhythm are substantially the same.

Meanwhile, the rhythm timing image Pa2 is an image captured at a timing at which the user A keeps motion rhythm when the user B does not keep motion rhythm.

Further, there is a slight gap in positions in a time direction between the rhythm timing image Pa4 and the rhythm timing image Pb3. It can be understood from this that there is a gap between a timing at which the user A keeps motion rhythm and a timing at which the user B keeps motion rhythm.

Note that, as the images Pa1 to Pb3, images obtained by individually capturing the respective users may be used, or images obtained by extracting respective users from an image obtained by capturing the user A and the user B together, may be used.

In the example in Fig. 34, it is possible to easily compare rhythm of motion (motion rhythm) between respective users. Therefore, for example, by setting one of a plurality of users as a user who becomes a model, other users can easily compare their motion with motion which becomes a model. Particularly, it is possible to recognize a difference in rhythm of motion accurately. As a result, each user can easily recognize, for example, how he/she can fit his/her motion to the model, so that he/she can improve his/her motion.

Fig. 35 illustrates an example in a case where the image is displayed on the basis of the degree of synchronization and the rhythm timing.

The display screen in Fig. 35 is, similar to the display screen in Fig. 34, roughly divided into an image display portion 501 in an upper part of the screen and an operation portion 502 in a lower part of the screen. The configuration of the operation portion 502 is similar to the display screen in Fig. 34.

Meanwhile, at the image display portion 501, only the rhythm timing images of the user A and the user B when the degree of synchronization of motion of the user A and the user B becomes a peak are extracted and displayed.

That is, rhythm timing images Pa11 to Pa14 of the user A are arranged and displayed in chronological order. Further, rhythm timing images Pb11 to Pb14 of the user B are arranged and displayed in chronological order.

Respective pairs of the rhythm timing image Pa11 and the rhythm timing image Pb11 which are vertically arranged, the rhythm timing image Pa12 and the rhythm timing image Pb12 which are vertically arranged, the rhythm timing image Pa13 and the rhythm timing image Pb13 which are vertically arranged, and the rhythm timing image Pa14 and the rhythm timing image Pb14 which are vertically arranged, are respectively images captured at the same timings at which the degree of synchronization becomes a peak.

Note that, as the images Pa11 to Pb14, images obtained by individually capturing the respective users may be used, or images obtained by extracting respective users from an image obtained by capturing the user A and the user B together, may be used.

Fig. 36 illustrates another example in a case where the image is displayed on the basis of the degree of synchronization and the rhythm timing.

The display screen in Fig. 36 is, similar to the display screen in Figs. 34 and 35, roughly divided into an image display portion 501 in an upper part of the screen and an operation portion 502 in a lower part of the screen. The configuration of the operation portion 502 is similar to the display screen in Figs. 34 and 35.

Meanwhile, at the image display portion 501, similar to the display screen in Fig. 35, only the rhythm timing images of the user A to the user C when the degree of synchronization of motion of the user A to the user C becomes a peak are extracted and displayed.

However, in this display screen, unlike with the display screen in Fig. 35, images of the user A to user C captured when the degree of synchronization becomes a peak are collectively displayed. That is, the images P21 and P22 respectively include, in one image, images of the user A to user C captured when the degree of synchronization becomes a peak.

Note that, as the images P21 and P22, an image obtained by capturing an image of the user A to user C together may be used, or an image obtained by synthesizing images obtained by individually capturing images of the respective users when the degree of synchronization becomes a peak may be used.

In the examples in Figs. 35 and 36, it is possible to easily extract and display an image at a moment at which the degree of synchronization between the respective users is high, for example, at a moment at which motion of the respective users completely matches.

Note that, in the display screens in Fig. 34 to Fig. 36, effect may be applied to each image on the basis of the degree of rhythm in a similar manner to the display screen in Fig. 29.

Further, for example, it is also possible to always capture images of the respective users, and process and display the captured images (moving images) later on the basis of the rhythm timing, the degree of rhythm and the degree of synchronization.

<<5. Fifth embodiment>>

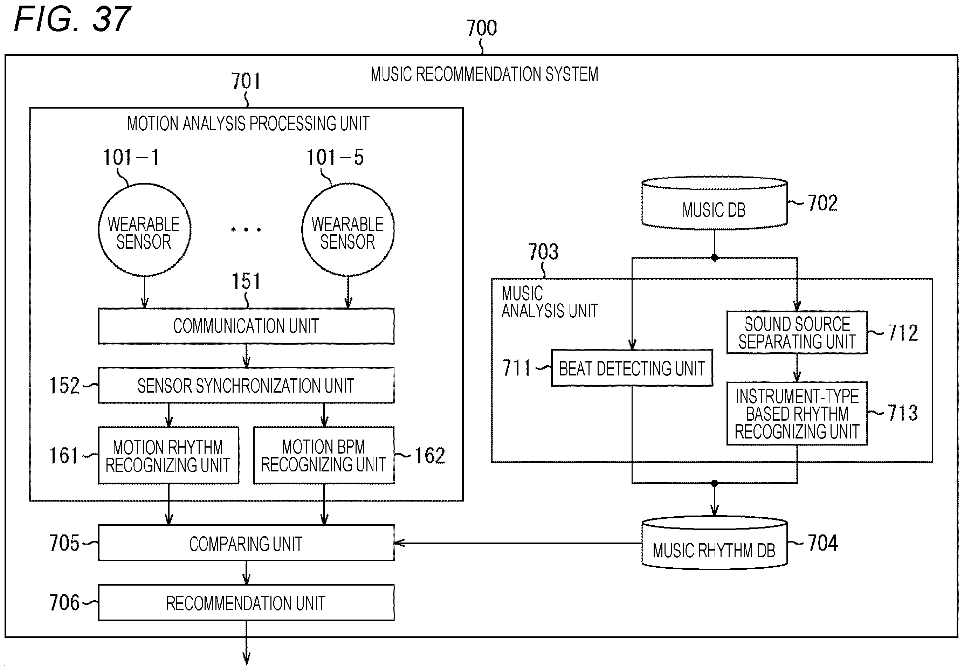

Next, a fifth embodiment of the present technology will be described with reference to Fig. 37 to Fig. 38.

<Configuration example of functions of music recommendation system 700>

Fig. 37 illustrates a configuration example of functions of a music recommendation system 700 to which the present technology is applied. Note that, in the drawing, the same reference numerals are assigned to portions corresponding to the portions in Fig. 4, and description thereof will be omitted as appropriate.

The music recommendation system 700 includes a motion analysis processing unit 701, a music database (DB) 702, a music analysis unit 703, a music rhythm database (DB) 704, a comparing unit 705, and a recommendation unit 706.

The motion analysis processing unit 701 includes wearable sensors 101-1 to 101-5, the communication unit 151, the sensor synchronization unit 152, the motion rhythm recognizing unit 161, and the motion BPM recognizing unit 162.

The motion rhythm recognizing unit 161 performs processing of recognizing motion rhythm of the user on the basis of the motion detection data to each of the wearable sensor 101 via the communication unit 151 and the sensor synchronization unit 152. The motion rhythm recognizing unit 161 supplies data indicating a recognition result of the motion rhythm of the user to the comparing unit 705.

The motion BPM recognizing unit 162 performs processing of recognizing motion BPM of the user on the basis of the motion detection data to each of the wearable sensor 101 via the communication unit 151 and the sensor synchronization unit 152. The motion BPM recognizing unit 162 supplies data indicating a recognition result of the motion BPM of the user to the comparing unit 705.

In the music DB 702, music data to be used for reproducing each piece of music is registered.

The music analysis unit 703 performs processing of analyzing the music data registered in the music DB 702. The music analysis unit 703 includes a beat detecting unit 711, a sound source separating unit 712, and an instrument-type based rhythm recognizing unit 713.

The beat detecting unit 711 detects beats of each piece of music on the basis of each piece of music data registered in the music DB 702. The beat detecting unit 711 registers data indicating the detected beats of each piece of music in the music rhythm DB 704.

The sound source separating unit 712 separates each piece of music data registered in the music DB 702 for each sound source (that is, for each instrument) and supplies audio data for each instrument after separation to the instrument-type based rhythm recognizing unit 713.

The instrument-type based rhythm recognizing unit 713 performs processing of recognizing rhythm of each piece of music for each instrument on the basis of the audio data of each piece of music for each instrument. For example, the instrument-type based rhythm recognizing unit 713 recognizes a timing at which rhythm of each instrument is kept and the degree of rhythm indicating strength of rhythm of each instrument on the basis of a volume, or the like, of each instrument. The instrument-type based rhythm recognizing unit 713 registers data indicating the recognized rhythm of each piece of music for each instrument and degree of rhythm in the music rhythm DB 704.

In the music rhythm DB 704, beats of each piece of music, and data indicating the rhythm and the degree of rhythm for each instrument are registered.

The comparing unit 705 compares rhythm of motion of the user with the rhythm of each piece of music registered in the music rhythm DB 704, and supplies data indicating a comparison result to the recommendation unit 706.

The recommendation unit 706 selects music to be recommended to the user on the basis of the result of comparison between the rhythm of motion of the user and the rhythm of each piece of music, and outputs data indicating the music to be recommended.

<Music recommendation processing>

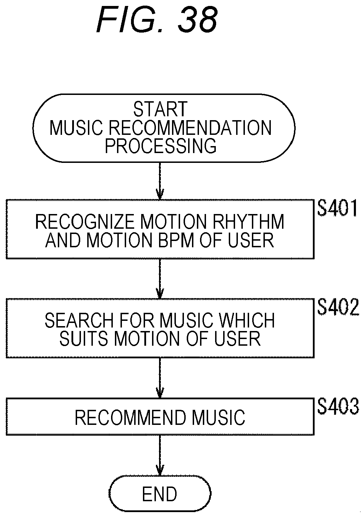

Next, music recommendation processing to be executed by the music recommendation system 700 will be described next with reference to a flowchart in Fig. 38.

In step S401, the motion analysis processing unit 701 recognizes the motion rhythm and the motion BPM of the user.

Specifically, the motion rhythm recognizing unit 161 performs processing of recognizing motion rhythm of each user on the basis of the motion detection data supplied from each wearable sensor 101 via the communication unit 151 and the sensor synchronization unit 152 through processing similar to the processing in step S31 in Fig. 10 described above. Then, the motion rhythm recognizing unit 161 supplies rhythm timing data indicating a timing at which the user keeps the motion rhythm and rhythm degree data indicating a degree of rhythm to the comparing unit 705.

The motion BPM recognizing unit 162 performs, by similar processing in step S31 in Fig. 10 described above, processing of recognizing motion BPM of the user on the basis of the motion detection data supplied to each of the wearable sensor 101 via the communication unit 151 and the sensor synchronization unit 152. The motion BPM recognizing unit 162 supplies the motion BPM data indicating the detected motion BPM to the comparing unit 705.

In step S402, the comparing unit 705 searches for music which suits motion of the user.

For example, the comparing unit 705 extracts music having BPM which is different from motion BPM of the user within a predetermined range, among music registered in the music rhythm DB.

Then, the comparing unit 705 detects a degree of matching between the rhythm of each instrument of the extracted music and the motion rhythm of the user. Note that the degree of matching between the rhythm of each instrument and the motion rhythm can be detected using a calculation method similar to that for the degree of synchronization of the motion rhythm between users described above. For example, a correlation coefficient between the timing at which rhythm of each instrument is kept and the timing at which the user keeps motion rhythm can be set as the degree of matching. Further, for example, mutual correlation between the degree of rhythm of each instrument and the degree of rhythm of the user can be set as the degree of matching.

The comparing unit 705 supplies data indicating the extracted degree of matching of each piece of music to the recommendation unit 706.

In step S403, the recommendation unit 706 recommends music.

Specifically, the recommendation unit 706 extracts music which suits motion of the user on the basis of the degree of matching of each piece of music. For example, the recommendation unit 706 extracts music whose degree of matching of at least one instrument is equal to or greater than a predetermined threshold. Alternatively, for example, the recommendation unit 706 obtains a maximum value of the degree of matching for each instrument and extracts a predetermined number of pieces of music whose maximum value of the degree of matching is high. Further, for example, the recommendation unit 706 calculates an average value of the degree of matching of all instruments for each piece of music and extracts music whose average value of the degree of matching is equal to or greater than a predetermined threshold. Alternatively, for example, the recommendation unit 706 extracts a predetermined number of pieces of music whose average value of the degree of matching is high.

Then, the recommendation unit 706 outputs data indicating the extracted music to the subsequent apparatus.

The subsequent apparatus, for example, presents information regarding the recommended music or reproduces the recommended music.

Thereafter, music recommendation processing is finished.

As described above, it is possible to appropriately recommend music which suits motion of the user. For example, it is possible to recommend music having rhythm which matches or is similar to the motion rhythm of the user. By this means, for example, in a case where the user starts dancing without BGM, it is possible to search for music which suits the dance and use the music as BGM.

<Modified example of fifth embodiment>

While, in the above description, an example has been described where music to be recommended is selected from music having BPM which matches or is similar to the motion BPM of the user, it is also possible to select music to be recommended only using rhythm for each instrument without using BPM.

Further, for example, it is also possible to select music to be recommended on the basis of a result of comparison between the motion rhythm of the user and rhythm for each instrument after BPM of each piece of music is made to match the motion BPM of the user. In this case, for example, music is reproduced in a state where BPM of music to be recommended is made to match the motion BPM of the user.

<<6. Modified example >>

Modified examples of the above-described embodiments of the present technology will be described below.

Assignment of functions of the respective apparatuses and systems described above is an example, and can be changed as appropriate.

For example, all or part of the motion rhythm recognizing unit 161, the motion BPM recognizing unit 162, and the motion recognizing unit 163 may be provided at the wearable sensor 101.

Further, while, in the above description, an example has been described where the present technology is applied to a case where motion of a human is analyzed, the present technology can be also applied to a case where motion of an object other than a human is analyzed. An object for which motion is to be analyzed may be either a living object such as an animal or a non-living object such as a robot. Further, in a case where a target to be recognized is a non-living object, the target may be either a non-living object such as a robot which moves autonomously or in response to user operation or a non-living object such as a float in the sea, which moves by external force such as wave and wind.

<<7. Others>>

<Example of computer configuration>

The above-described series of processes may be performed by hardware or may be performed by software. In a case where the series of processes is performed by software, a program forming the software is installed into a computer. Here, examples of the computer include a computer that is incorporated in dedicated hardware, a general-purpose personal computer that can perform various types of function by installing various types of program, and the like.

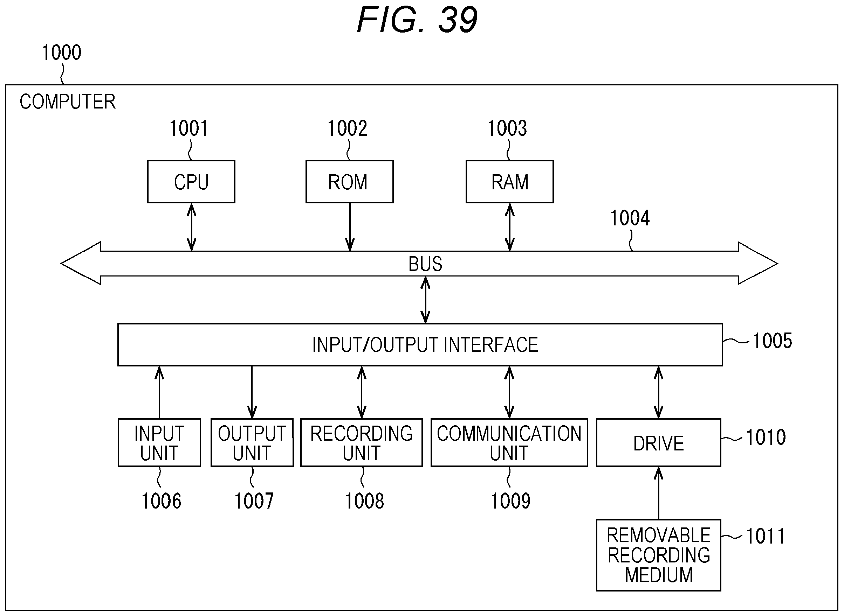

Fig. 39 is a block diagram illustrating a configuration example of the hardware of a computer that performs the above-described series of processes with a program.

In the computer 1000, a central processing unit (CPU) 1001, read only memory (ROM) 1002, and random access memory (RAM) 1003 are mutually connected by a bus 1004.

Further, an input/output interface 1005 is connected to the bus 1004. Connected to the input/output interface 1005 are an input unit 1006, an output unit 1007, a recording unit 1008, a communication unit 1009, and a drive 1010.

The input unit 1006 includes an input switch, a button, a microphone, an imaging element, and the like. The output unit 1007 includes a display, a speaker, and the like. The recording unit 1008 includes a hard disk, a non-volatile memory, and the like. The communication unit 1009 includes a network interface, and the like. The drive 1010 drives a removable recording medium 1011 such as a magnetic disk, an optical disc, a magneto-optical disk, and a semiconductor memory.

In the computer 1000 configured as described above, the CPU 1001 loads a program that is stored, for example, in the recording unit 1008 onto the RAM 1003 via the input/output interface 1005 and the bus 1004, and executes the program, thereby performing the above-described series of processes.

For example, programs to be executed by the computer 1000 (CPU 1001) can be recorded and provided in the removable recording medium 1011, which is a packaged medium or the like. In addition, programs can be provided via a wired or wireless transmission medium such as a local area network, the Internet, and digital satellite broadcasting.

In the computer 1000, by mounting the removable recording medium 1011 onto the drive 1010, programs can be installed into the recording unit 1008 via the input/output interface 1005. In addition, programs can also be received by the communication unit 1009 via a wired or wireless transmission medium, and installed into the recording unit 1008. In addition, programs can be installed in advance into the ROM 1002 or the recording unit 1008.

Note that a program executed by the computer may be a program in which processes are chronologically carried out in a time series in the order described herein or may be a program in which processes are carried out in parallel or at necessary timing, such as when the processes are called.

Further, in this specification, a system has the meaning of a set of a plurality of structural elements (such as an apparatus or a module (part)), and does not take into account whether or not all the structural elements are in the same casing. Therefore, the system may be either a plurality of apparatuses stored in separate casings and connected through a network, or an apparatus in which a plurality of modules is stored within a single casing.

Further, an embodiment of the present technology is not limited to the embodiments described above, and various changes and modifications may be made without departing from the scope of the present technology.

For example, the present technology can adopt a configuration of cloud computing, in which a plurality of devices shares a single function via a network and performs processes in collaboration.

Furthermore, each step in the above-described flowcharts can be executed by a single device or shared and executed by a plurality of devices.

In addition, in a case where a single step includes a plurality of processes, the plurality of processes included in the single step can be executed by a single device or shared and executed by a plurality of devices.

<Combination example of configuration>

The present technology may also be configured as below.

(1) An information processing apparatus including:
a motion rhythm recognizing unit configured to recognize motion rhythm indicating rhythm of motion of a user on the basis of detection data detected by a sensor apparatus at one or more detection positions including at least one portion on a body trunk of the user, the detection data indicating motion of the detection positions.
(2) The information processing apparatus according to (1),
in which the motion rhythm is expressed with accent of the motion of the user.
(3) The information processing apparatus according to (2),
in which the accent of the motion is expressed with a direction, speed and change of a pattern of the motion of the user.
(4) The information processing apparatus according to any one of (1) to (3), further including:
a production control unit configured to control production of performance of the user on the basis of the motion rhythm.
(5) The information processing apparatus according to (4), further including:
a motion BPM recognizing unit configured to recognize motion BPM which is a basic frequency of the motion of the user on the basis of the detection data,
in which the production control unit controls the production further on the basis of the motion BPM.
(6) The information processing apparatus according to (4) or (5), further including:

a motion recognizing unit configured to recognize motion which is a unit of motion constituting behavior of the user, on the basis of the detection data,
in which the production control unit controls the production further on the basis of the recognized motion.

(7) The information processing apparatus according to any one of (1) to (6),
in which the motion rhythm recognizing unit recognizes the motion rhythm of a plurality of users, and
the information processing apparatus further includes a synchronization degree detecting unit configured to detect a degree of synchronization indicating a degree of matching of the motion rhythm between the users.
(8) The information processing apparatus according to (7), further including:
a production control unit configured to control production of performance in which the plurality of users takes part, on the basis of the degree of synchronization.
(9) The information processing apparatus according to (7) or (8),
in which the motion rhythm recognizing unit detects degrees of rhythm indicating strength of the motion rhythm of the users, and
the synchronization degree detecting unit detects the degree of synchronization on the basis of the degrees of rhythm of the users.
(10) The information processing apparatus according to any one of (7) to (9), further including at least one of:

an imaging control unit configured to control capturing of images of the users on the basis of the degree of synchronization; and
a display control unit configured to control display of the images of the users on the basis of the degree of synchronization.

(11) The information processing apparatus according to any one of (1) to (9), further including at least one of:

an imaging control unit configured to control capturing of an image of the user on the basis of the motion rhythm; and
a display control unit configured to control display of the image of the user on the basis of the motion rhythm.

(12) The information processing apparatus according to (11),
in which the motion rhythm recognizing unit detects a degree of rhythm indicating strength of the motion rhythm, and
the display control unit controls display of the image of the user further on the basis of the degree of rhythm.
(13) The information processing apparatus according to any one of (1), (4), and (7) to (12), further including:
a recommendation unit configured to select music to be recommended on the basis of a result of comparison between the motion rhythm and rhythm of music.
(14) The information processing apparatus according to (13), further including:

a motion BPM recognizing unit configured to recognize motion BPM which is a basic frequency of the motion of the user on the basis of the detection data,
in which the recommendation unit selects music to be recommended further on the basis of a result of comparison between the motion BPM and BPM of music.

(15) The information processing apparatus according to any one of (1) to (8) and (10) to (14),
in which the motion rhythm recognizing unit detects a degree of rhythm indicating strength of the motion rhythm.
(16) The information processing apparatus according to (15),
in which the motion rhythm recognizing unit detects the degrees of rhythm of a plurality of users, and
the information processing apparatus further includes a production control unit configured to control production of performance in which the plurality of users takes part, on the basis of the degrees of rhythm of the plurality of users.
(17) The information processing apparatus according to any one of (1) to (4), (7) to (13), (15), and (16), further including:
a motion BPM recognizing unit configured to recognize motion BPM which is a basic frequency of the motion of the user on the basis of the detection data.
(18) The information processing apparatus according to any one of (1) to (17),
in which the detection position further includes at least one portion among both hands and both feet of the user.
(19) An information processing method, including:

by an information processing apparatus,
recognizing motion rhythm indicating rhythm of motion of a user on the basis of detection data detected by a sensor apparatus at one or more detection positions including at least one portion on a body trunk of the user, the detection data indicating motion of the detection positions.

(20) A program for causing a computer to execute processing of:
recognizing motion rhythm indicating rhythm of motion of a user on the basis of detection data detected by a sensor apparatus at one or more detection positions including at least one portion on a body trunk of the user, the detection data indicating motion of the detection positions.

REFERENCE SIGNS LIST

| | |
|---|---|
| 100 | Production system |
| 101-1 to 101-6 | Wearable sensor |
| 102 | Analysis calculator |
| 103 | Control calculator |
| 104 | Production equipment |
| 151 | Communication unit |
| 153 | Motion analysis unit |
| 154 | Production control unit |
| 155 | Lighting equipment |
| 156 | Video equipment |
| 157 | Audio equipment |
| 161 | Motion rhythm recognizing unit |
| 162 | Motion BPM recognizing unit |
| 163 | Motion recognizing unit |
| 171 | Lighting control unit |
| 172 | Video control unit |
| 173 | Audio control unit |
| 300 | Synchronization evaluation system |
| 301-1 to 301-n | Motion analysis processing unit |
| 302 | Synchronization degree detecting unit |
| 303 | Presentation equipment |
| 400 | Imaging system |
| 401 | Calculator |
| 402 | Display equipment |
| 403 | Imaging unit |
| 451 | Imaging control unit |

| 453 | Display control unit |
|-----|----------------------|
| 600 | Imaging system |
| 601 | Synchronization degree peak detecting unit |
| 602 | Imaging control unit |
| 603 | Display control unit |
| 700 | Music recommendation system |
| 701 | Motion analysis processing unit |
| 703 | Music analysis unit |
| 704 | Comparing unit |
| 705 | Recommendation unit |
| 711 | Beat detecting unit |
| 712 | Sound source separating unit |
| 713 | Instrument-type based rhythm recognizing unit |

**Claims**

1.  An information processing apparatus comprising:
    a motion rhythm recognizing unit configured to recognize motion rhythm indicating rhythm of motion of a user on a basis of detection data detected by a sensor apparatus at one or more detection positions including at least one portion on a body trunk of the user, the detection data indicating motion of the detection positions.

2.  The information processing apparatus according to claim 1,
    wherein the motion rhythm is expressed with accent of the motion of the user.

3.  The information processing apparatus according to claim 2,
    wherein the accent of the motion is expressed with a direction, speed and change of a pattern of the motion of the user.

4.  The information processing apparatus according to claim 1, further comprising:
    a production control unit configured to control production of performance of the user on a basis of the motion rhythm.

5.  The information processing apparatus according to claim 4, further comprising:

    a motion BPM recognizing unit configured to recognize motion BPM which is a basic frequency of the motion of the user on a basis of the detection data,
    wherein the production control unit controls the production further on a basis of the motion BPM.

6.  The information processing apparatus according to claim 4, further comprising:

    a motion recognizing unit configured to recognize motion which is a unit of motion constituting behavior of the user, on a basis of the detection data,
    wherein the production control unit controls the production further on a basis of the recognized motion.

7.  The information processing apparatus according to claim 1,
    wherein the motion rhythm recognizing unit recognizes the motion rhythm of a plurality of users, and
    the information processing apparatus further comprises a synchronization degree detecting unit configured to detect a degree of synchronization indicating a degree of matching of the motion rhythm between the users.

8.  The information processing apparatus according to claim 7, further comprising:
    a production control unit configured to control production of performance in which the plurality of users takes part, on a basis of the degree of synchronization.

9.  The information processing apparatus according to claim 7,
    wherein the motion rhythm recognizing unit detects degrees of rhythm indicating strength of the motion rhythm of the users, and
    the synchronization degree detecting unit detects the degree of synchronization on a basis of the degrees of rhythm of the users.

10. The information processing apparatus according to claim 7, further comprising at least one of:

   an imaging control unit configured to control capturing of images of the users on a basis of the degree of synchronization; and
   a display control unit configured to control display of the images of the users on a basis of the degree of synchronization.

11. The information processing apparatus according to claim 1, further comprising at least one of:

   an imaging control unit configured to control capturing of an image of the user on a basis of the motion rhythm; and
   a display control unit configured to control display of the image of the user on a basis of the motion rhythm.

12. The information processing apparatus according to claim 11,
   wherein the motion rhythm recognizing unit detects a degree of rhythm indicating strength of the motion rhythm, and
   the display control unit controls display of the image of the user further on a basis of the degree of rhythm.

13. The information processing apparatus according to claim 1, further comprising:
   a recommendation unit configured to select music to be recommended on a basis of a result of comparison between the motion rhythm and rhythm of music.

14. The information processing apparatus according to claim 13, further comprising:

   a motion BPM recognizing unit configured to recognize motion BPM which is a basic frequency of the motion of the user on a basis of the detection data,
   wherein the recommendation unit selects music to be recommended further on a basis of a result of comparison between the motion BPM and BPM of music.

15. The information processing apparatus according to claim 1,
   wherein the motion rhythm recognizing unit detects a degree of rhythm indicating strength of the motion rhythm.

16. The information processing apparatus according to claim 15,
   wherein the motion rhythm recognizing unit detects the degrees of rhythm of a plurality of users, and
   the information processing apparatus further comprises a production control unit configured to control production of performance in which the plurality of users takes part, on a basis of the degrees of rhythm of the plurality of users.

17. The information processing apparatus according to claim 1, further comprising:
   a motion BPM recognizing unit configured to recognize motion BPM which is a basic frequency of the motion of the user on a basis of the detection data.

18. The information processing apparatus according to claim 1,
   wherein the detection position further includes at least one portion among both hands and both feet of the user.

19. An information processing method, comprising:

   by an information processing apparatus,
   recognizing motion rhythm indicating rhythm of motion of a user on a basis of detection data detected by a sensor apparatus at one or more detection positions including at least one portion on a body trunk of the user, the detection data indicating motion of the detection positions.

20. A program for causing a computer to execute processing of:
   recognizing motion rhythm indicating rhythm of motion of a user on a basis of detection data detected by a sensor apparatus at one or more detection positions including at least one portion on a body trunk of the user, the detection data indicating motion of the detection positions.

## FIG. 1

100

PRODUCTION SYSTEM

101-1

101-2

101-3

101-5

101-4

WIRELESS
COMMUNICATION

102

ANALYSIS
CALCULATOR

WIRED/WIRELESS
COMMUNICATION

103

CONTROL
CALCULATOR

WIRED/WIRELESS
COMMUNICATION

PRODUCTION
EQUIPMENT

104

## FIG. 2

## FIG. 3

FIG. 4

EP 3 730 196 A1

EP 3 730 196 A1

## FIG. 5

## FIG. 6

| TYPE OF SENSOR | SIZE | SAMPLING FREQUENCY |
|---|---|---|
| HDR ACCELERATION SENSOR | 16 BITS×THREE AXES | 1024Hz |
| LDR ACCELERATION SENSOR | 16 BITS×THREE AXES | 1024Hz |
| HDR ANGULAR VELOCITY SENSOR | 16 BITS×THREE AXES | 1024Hz |
| LDR ANGULAR VELOCITY SENSOR | 16 BITS×THREE AXES | 1024Hz |
| GEOMAGNETIC SENSOR | 16 BITS×THREE AXES | 128Hz |
| STRAIN SENSOR | 16 BITS×TWO AXES | 256Hz |
| ATMOSPHERIC PRESSURE SENSOR | 24 BITS | 128Hz |

EP 3 730 196 A1

## FIG. 7

```
        START
PROCESSING OF WEARABLE SENSOR
```

START ACQUISITION OF SENSOR DATA | S1

START MERGE PROCESSING OF ACCELERATION DATA AND ANGULAR VELOCITY DATA | S2

START DETECTION OF ATTITUDE | S3

START CORRECTION OF STRAIN DATA AND ATMOSPHERIC PRESSURE DATA | S4

NO — IS IT TIMING FOR TRANSMITTING COMMUNICATION PACKETS? | S5

YES

GENERATE COMMUNICATION PACKETS | S6

TRANSMIT COMMUNICATION PACKETS | S7

## FIG. 8

| HEADER | TIME STAMP | MOTION DETECTION DATA |
|---|---|---|

## FIG. 9

| TYPE OF DATA | SIZE | SAMPLING FREQUENCY | BIT RATE |
|---|---|---|---|
| ATTITUDE DATA | 16 BITS×THREE AXES | 128Hz | 6144bps |
| ACCELERATION DATA | 20 BITS×THREE AXES | 128Hz | 7680bps |
| ANGULAR VELOCITY DATA | 20 BITS×THREE AXES | 128Hz | 7680bps |
| STRAIN DATA | 16 BITS×TWO AXES | 128Hz | 4096bps |
| ATMOSPHERIC PRESSURE DATA | 24 BITS | 128Hz | 2048bps |

EP 3 730 196 A1

# FIG. 10

START
MOTION ANALYSIS PROCESSING

START MOTION ANALYSIS — S31

IS MOTION RHYTHM KEPT? — S32 / NO

YES

MAKE NOTIFICATION OF RHYTHM TIMING — S33

HAS MOTION RHYTHM BEEN CHANGED? — S34 / NO

YES

MAKE NOTIFICATION OF RHYTHM CHANGE TIMING — S35

HAS MOTION BPM BEEN CHANGED? — S36 / NO

YES

MAKE NOTIFICATION OF MOTION BPM — S37

NO — IS MOTION DETECTED? — S38

YES

MAKE NOTIFICATION OF TYPE OF MOTION — S39

# FIG. 11

BEAT

TIME

REGULAR, SUBSTANTIALLY NOT CHANGED WITHIN THE SAME MUSIC

MOTION RHYTHM

TIME

OFTEN GOT INTO BEATS

ARBITRARY TIMING NOT KNOWN FROM MUSIC

FIG. 12

EP 3 730 196 A1

FIG. 13

FIG. 14

jerk

biz_markie

worm

front_groove

jump

EP 3 730 196 A1

FIG. 15

EP 3 730 196 A1

## FIG. 16

MAKE NOTIFICATION AT TIMING MOTION IS COMPLETED

EP 3 730 196 A1

# FIG. 17

```
          ┌─────────────────────────────────┐
          │            START                │
          │  PRODUCTION CONTROL PROCESSING  │
          └─────────────────────────────────┘
                          │
      ┌───────────────────▼─────────────────┐
      │    ACQUIRE MOTION ANALYSIS RESULT    │ S61
      └──────────────────┬──────────────────┘
                         │
      ┌──────────────────▼──────────────────┐
      │     PERFORM PRODUCTION CONTROL ON    │ S62
      │  THE BASIS OF MOTION ANALYSIS RESULT │
      └─────────────────────────────────────┘
```

## FIG. 18

| TARGET TO BE RECOGNIZED | PARAMETER | LIGHTING | VIDEO | AUDIO |
|---|---|---|---|---|
| MOTION RHYTHM | TIMING/STRENGTH (DEGREE OF RHYTHM) | · EMIT LIGHT STRONGLY<br>· CHANGE LIGHTING DIRECTION | · APPLY EFFECT | · PRODUCE EFFECT SOUND |
| | CHANGE TIMING | · CHANGE COLOR THEME<br>· SWITCH LIGHT EMISSION PATTERN | · CHANGE COLOR THEME<br>· SWITCH VIDEO<br>· CUT CHANGE | · SWITCH BGM<br>· SWITCH BEAT PATTERN<br>· PRODUCE EFFECT SOUND |
| MOTION BPM | — | · ADJUST REGULAR BLINKING TIMING | · ADJUST SPEED OF ANIMATION OF AVATAR | · OUTPUT BEAT PATTERN<br>· ADJUST BPM OF MUSIC |
| MOTION | TIMING/TYPE/ STRENGTH | · EMIT LIGHT GAUDILY<br>· CHANGE COLOR THEME<br>· SWITCH LIGHT EMISSION PATTERN | · APPLY EFFECT<br>· ALLOCATE ANIMATION RELEVANT TO MOTION TO AVATAR<br>· OUTPUT PARTICLE EXPRESSION RELEVANT TO MOTION<br>· CUT CHANGE | · PRODUCE EFFECT SOUND |

# FIG. 19

SYNCHRONIZATION EVALUATION SYSTEM — 300

**301-1 MOTION ANALYSIS PROCESSING UNIT**
- 101-1 WEARABLE SENSOR ... 101-5 WEARABLE SENSOR
- 151 COMMUNICATION UNIT
- 152 SENSOR SYNCHRONIZATION UNIT
- 161 MOTION RHYTHM RECOGNIZING UNIT

**301-n MOTION ANALYSIS PROCESSING UNIT**
- 101-1 WEARABLE SENSOR ... 101-5 WEARABLE SENSOR
- COMMUNICATION UNIT — 151
- SENSOR SYNCHRONIZATION UNIT — 152
- MOTION RHYTHM RECOGNIZING UNIT — 161

302 SYNCHRONIZATION DEGREE DETECTING UNIT

PRESENTATION EQUIPMENT — 303

EP 3 730 196 A1

# FIG. 20

```
        ┌──────────────────────────────┐
        │            START             │
        │       SYNCHRONIZATION        │
        │     EVALUATION PROCESSING    │
        └──────────────┬───────────────┘
                       │
   ┌───────────────────▼──────────────────┐
   │  ┌───────────────────────────────┐   │ S101
   │  │    RECOGNIZE MOTION RHYTHM     │   │
   │  │        OF EACH USER           │   │
   │  └───────────────┬───────────────┘   │
   │                  │                   │
   │  ┌───────────────▼───────────────┐   │ S102
   │  │  DETECT DEGREE OF SYNCHRONIZATION│ │
   │  └───────────────┬───────────────┘   │
   │                  │                   │
   │  ┌───────────────▼───────────────┐   │ S103
   │  │ PRESENT DEGREE OF SYNCHRONIZATION│ │
   │  └───────────────────────────────┘   │
   └──────────────────────────────────────┘
```

FIG. 21

## FIG. 22

DEGREE OF RHYTHM

USER A
USER B

TIME

FIG. 23

## FIG. 24

400

IMAGING SYSTEM

101-1

WIRELESS
COMMUNICATION

101-2

101-3

101-5

101-4

403

WIRELESS
COMMUNICATION

401

CALCULATOR

402

DISPLAY
EQUIPMENT

EP 3 730 196 A1

## FIG. 25

# FIG. 26

```
        ┌─────────────────────────────────┐
        │             START               │
        │  IMAGING CONTROL PROCESSING     │
        └─────────────────────────────────┘
                      │
                      ▼
        ┌─────────────────────────────────┐ S201
        │     START RECOGNITION AND       │
        │  RECORDING OF MOTION RHYTHM     │
        └─────────────────────────────────┘
                      │
                      ▼
        ┌──────────────────────────────┐ S202
        │   IS MOTION RHYTHM KEPT?      │────NO──┐
        └──────────────────────────────┘         │
                      │YES                        │
                      ▼                           │
        ┌──────────────────────────────┐ S203     │
        │         CAPTURE IMAGE         │         │
        └──────────────────────────────┘         │
                      │◄────────────────────────┘
                      ▼
    NO ┌──────────────────────────────┐ S204
    ┌──│    FINISH IMAGE CAPTURING?    │
    │  └──────────────────────────────┘
    │                 │YES
    │                 ▼
    │           ┌───────────┐
    │           │    END    │
    │           └───────────┘
    └──────────────────────────────────
```

# FIG. 27

```
        ┌─────────────────────────────┐
        │            START            │
        │  DISPLAY CONTROL PROCESSING  │
        └─────────────────────────────┘
                      │
                      ▼
        ┌─────────────────────────────┐  S231
        │ SET DISPLAY LAYOUT ON THE BASIS │
        │       OF RHYTHM TIMING       │
        └─────────────────────────────┘
                      │
                      ▼
        ╱──────────────────────────────╲  S232
       ╱  PROCESS IMAGE ON THE BASIS     ╲  NO
       ╲   OF DEGREE OF RHYTHM?          ╱───────┐
        ╲──────────────────────────────╱        │
                      │ YES                       │
                      ▼                           │
        ┌─────────────────────────────┐  S233     │
        │     CALCULATE INTENSITY OF   │           │
        │     EFFECT OF EACH IMAGE     │           │
        └─────────────────────────────┘           │
                      │                           │
                      ▼                           │
        ┌─────────────────────────────┐  S234     │
        │    APPLY EFFECT TO EACH IMAGE│           │
        └─────────────────────────────┘           │
                      │◄──────────────────────────┘
                      ▼
        ┌─────────────────────────────┐  S235
        │         DISPLAY IMAGE        │
        └─────────────────────────────┘
                      │
                      ▼
                ┌───────────┐
                │    END    │
                └───────────┘
```

# FIG. 28

EP 3 730 196 A1

FIG. 29

# FIG. 30

PICKUP DISPLAY    MOVING IMAGE DISPLAY

Motion1    Motion2    Motion3

Rhythm    Motion    Chapter

FIG. 31

# FIG. 32

```
        ┌─────────────────────────────────┐
        │             START               │
        │  IMAGING CONTROL PROCESSING     │
        └─────────────────────────────────┘
                         │
                         ▼
        ┌─────────────────────────────────┐  S301
        │      START RECOGNITION AND      │
        │   RECORDING OF MOTION RHYTHM    │
        └─────────────────────────────────┘
                         │
                         ▼
        ┌─────────────────────────────────┐  S302
        │   START DETECTION AND RECORDING │
        │   OF DEGREE OF SYNCHRONIZATION  │
        └─────────────────────────────────┘
                         │
                         ▼
   YES ◁────┤  IS PEAK OF DEGREE OF       ├  S303
            │  SYNCHRONIZATION DETECTED?  │
                         │ NO
                         ▼
            ┤   IS MOTION RHYTHM KEPT?    ├  S304  NO
                         │ YES
                         ▼
        ┌─────────────────────────────────┐  S305
        │          CAPTURE IMAGE          │
        └─────────────────────────────────┘
                         │
                         ▼
   NO ◁────┤   FINISH IMAGE CAPTURING?    ├  S306
                         │ YES
                         ▼
                    ┌─────────┐
                    │   END   │
                    └─────────┘
```

# FIG. 33

START
DISPLAY CONTROL PROCESSING

SET DISPLAY LAYOUT ON THE BASIS OF DEGREE OF SYNCHRONIZATION? — S331

NO

YES

SET DISPLAY LAYOUT ON THE BASIS OF DEGREE OF SYNCHRONIZATION AND RHYTHM TIMING — S332

SET DISPLAY LAYOUT ON THE BASIS OF RHYTHM TIMING — S333

PROCESS IMAGE ON THE BASIS OF DEGREE OF RHYTHM? — S334

NO

YES

CALCULATE INTENSITY OF EFFECT OF EACH IMAGE — S335

APPLY EFFECT TO EACH IMAGE — S336

DISPLAY IMAGE — S337

END

FIG. 34

EP 3 730 196 A1

# FIG. 35

USER A

Pa11  Pa12  Pa13  Pa14

501

USER B

Pb11  Pa12  Pb13  Pb14

511

512  513  502

514  515

FIG. 36

## FIG. 37

700 · MUSIC RECOMMENDATION SYSTEM

701 · MOTION ANALYSIS PROCESSING UNIT

101-1 WEARABLE SENSOR · · · 101-5 WEARABLE SENSOR

151 COMMUNICATION UNIT

152 SENSOR SYNCHRONIZATION UNIT

161 MOTION RHYTHM RECOGNIZING UNIT

162 MOTION BPM RECOGNIZING UNIT

702 MUSIC DB

703 MUSIC ANALYSIS UNIT

711 BEAT DETECTING UNIT

712 SOUND SOURCE SEPARATING UNIT

713 INSTRUMENT-TYPE BASED RHYTHM RECOGNIZING UNIT

704 MUSIC RHYTHM DB

705 COMPARING UNIT

706 RECOMMENDATION UNIT

# FIG. 38

```
           START
    MUSIC RECOMMENDATION
        PROCESSING
```

RECOGNIZE MOTION RHYTHM
AND MOTION BPM OF USER            S401

SEARCH FOR MUSIC WHICH
SUITS MOTION OF USER              S402

RECOMMEND MUSIC                   S403

END

## FIG. 39

## INTERNATIONAL SEARCH REPORT

| International application No. |
|---|
| PCT/JP2018/044640 |

**A. CLASSIFICATION OF SUBJECT MATTER**
Int.Cl. A63B71/06(2006.01)i, A63B69/00(2006.01)i

According to International Patent Classification (IPC) or to both national classification and IPC

**B. FIELDS SEARCHED**

Minimum documentation searched (classification system followed by classification symbols)
Int.Cl. A63B71/06, A63B69/00

Documentation searched other than minimum documentation to the extent that such documents are included in the fields searched

Published examined utility model applications of Japan      1922-1996
Published unexamined utility model applications of Japan   1971-2019
Registered utility model specifications of Japan           1996-2019
Published registered utility model applications of Japan   1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2008-299631 A (SONY ERICSSON MOBILECOMMUNICATIONS JAPAN INC.) 11 December 2008, paragraphs [0013]-[0084], fig. 1-10 (Family: none) | 1-6, 13-17, 19-20<br>10-12 |
| X<br>A | JP 2011-87794 A (SONY CORPORATION) 06 May 2011, paragraphs [0016]-[0082], fig. 1-10 & US 2011/0097695 A1, paragraphs [0042]-[0233], fig. 1-10 & CN 102039042 A | 1, 7-9, 15-16, 18-20<br>10-12 |

☒ Further documents are listed in the continuation of Box C.     ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18.01.2019 | 29.01.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

| International application No. |
| --- |
| PCT/JP2018/044640 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2015-66107 A (BROTHER INDUSTRIES, LTD.) 13 April 2015, paragraphs [0024]-[0085], fig. 1-6 (Family: none) | 1-20 |
| A | US 2015/0290495 A1 (NIKE, INC.) 15 October 2015, abstract, claims 1-22, fig. 1-23 & WO 2008/130751 A1 | 1-20 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011087794 A